# EUROPÄISCHE PATENTANMELDUNG

(11) **EP 4 537 668 A1**
(43) Veröffentlichungstag der Anmeldung: **16.04.2025**
(21) Anmeldenummer: 24204755.3
(22) Anmeldetag: 04.10.2024
(51) Int. Cl.: A23C 7/00, A23C 11/10, A23C 20/02, A23P 30/10, A23C 11/06

(54) **NAHRUNGSMITTELZUSAMMENSETZUNGEN UND VERFAHREN ZUM VERARBEITEN NAHRUNGSMITTELZUSAMMENSETZUNGEN**

(30) Priorität: 12.10.2023 DE 102023127946
(71) Anmelder: Molkerei Alois Müller GmbH & Co. KG, 86850 Aretsried (DE)
(72) Erfinder: de Assis Pires, Ricardo, 80939 München (DE); FUHRMEISTER, Heiko, 83209 Prien (DE); Schubert, Viviane Melina, 84147 Haunwang (DE); Krempl, Antonia, 85356 Freising (DE)
(74) Vertreter: Herrmann, Daniel

(57) **Zusammenfassung**

Die Erfindung betrifft ein Verfahren zum Verarbeiten einer Nahrungsmittelzusammensetzung, welches ein Bereitstellen einer vorzugsweise veganen Mischung, umfassend ein oder mehrere Proteine, ausgewählt aus pflanzlichen Proteinen, mikrobiellen Proteinen, Pilzproteinen, rekombinanten Proteinen und Kombinationen davon, und ein Drängen der Mischung durch eine von einer Mehrzahl von Öffnungen durchsetzte Verarbeitungseinrichtung von einer Retentatseite in Richtung auf eine Permeatseite, wobei die Mischung mit einer längs einer retentatseitigen Begrenzungsfläche der Verarbeitungseinrichtung bewegten Einstreifeinrichtung durch die Verarbeitungseinrichtung gedrängt wird, umfasst. Die Erfindung betrifft darüber hinaus Nahrungsmittelzusammensetzungen sowie die Verwendung einer Vorrichtung mit einer für eine Nahrungsmittelzusammensetzung von einer Retentatseite in Richtung auf eine Permeatseite durchlässigen Verarbeitungseinrichtung, gekennzeichnet durch eine längs der Retentatseite bewegbare und dadurch die Nahrungsmittelzusammensetzung in Richtung auf die Permeatseite drängende Einstreifeinrichtung, wobei die Verarbeitungseinrichtung einen von einer Mehrzahl von Öffnungen vorgegebener Größe und Geometrie durchsetzten, vorzugsweise starren Körper aufweist, zur Verarbeitung einer veganen Nahrungsmittelzusammensetzung.

## Beschreibung

Die Erfindung betrifft ein Verfahren zum Verarbeiten einer Nahrungsmittelzusammensetzung, bei dem eine vorzugsweise vegane Mischung, die ein oder mehrere Proteine, ausgewählt aus pflanzlichen Proteinen, mikrobiellen Proteinen, Pilzproteinen, rekombinanten Proteinen und Kombinationen davon, umfasst, durch eine von einer Mehrzahl von Öffnungen durchsetzte Verarbeitungseinrichtung von einer Retentatseite in Richtung auf eine Permeatseite gedrängt wird. Die Erfindung betrifft darüber hinaus Nahrungsmittelzusammensetzungen sowie eine Verwendung einer Vorrichtung mit einer für eine Nahrungsmittelzusammensetzung von einer Retentatseite in Richtung auf eine Permeatseite durchlässigen Verarbeitungseinrichtung zur Verarbeitung einer veganen Nahrungsmittelzusammensetzung.

Bei der Herstellung von Rührjoghurt auf Basis von Milch ist es zum Erhalt von Endprodukten mit einem gewünschten Aussehen, einer definierten Textur und Stabilität erforderlich, das infolge der Säuerung gebildete Gel in kleine Gelpartikel zu zerkleinern, um so eine Suspension bzw. kolloidale Dispersion zu erhalten, welche die für einen Rührjoghurt typischen Produkteigenschaften hat. Die mechanische Zerkleinerung der Gelpartikel wird üblicherweise durch gezieltes Rühren, Pumpen durch Spaltöffnungen oder Gewebesiebe oder mit Hilfe von Zahnkranzdispergiermaschinen durchgeführt. Diese Verfahren werden auch Glättungsverfahren genannt. Ziel der entsprechenden Verarbeitung fermentierter Milchprodukte ist es dabei, ein Endprodukt mit gewünschten optischen und sensorischen Eigenschaften, wie etwa ein besonders glattes Endprodukt, zu erhalten. Dabei hat die durch die Zerkleinerung des Gels entstehende Teilchengrößenverteilung der Gelpartikel einen großen Einfluss auf die Textur, insbesondere auf die Konsistenz und Suspensionsstabilität der Endprodukte.

Die Optimierung der erwünschten Produkteigenschaften, wie etwa der Erhalt eines besonders glatten Endprodukts und die maximale Texturausbeute, d. h. die optimale Ausnutzung des strukturbildenden Potentials der fermentierten Milchprodukte, hängt in großem Maß von den zur Verkleinerung der Gelpartikel eingesetzten Verfahren ab. Im Hinblick auf die gewünschten Produkteigenschaften eines fermentierten Milchprodukts ist es besonders vorteilhaft, die durch die Verarbeitung erhaltene Partikelgrößenverteilung möglichst eng einzustellen und die mittlere Partikelgröße möglichst groß zu wählen. Dabei wird die mittlere Partikelgröße allerdings üblicherweise im Hinblick auf einen vernünftigen Kompromiss zwischen gewünschten Produkteigenschaften, z.B. dem Erhalt eines glatten Produkts, und der Texturausbeute eingestellt.

Es hat sich herausgestellt, dass die bekannten Milchprodukte nicht alle Verbraucherbedürfnisse befriedigen. Beispielsweise gibt es zunehmend viele Verbraucher, welche auf Milchprodukte verzichten, beispielsweise da sie eine alternative Ernährungs- und Lebensweise, wie beispielsweise eine vegane Ernährungs- und Lebensweise, und/oder Milchprodukt-Nahrungsmittelunverträglichkeiten bzw. -Nahrungsmittelallergien haben. Diese Verbraucher haben häufig ein Bedürfnis nach Ersatzprodukten, welche einen ähnlichen Geschmack und eine ähnliche Textur wie die entsprechenden Milchprodukte aufweisen. Es besteht daher ein Bedarf an Nahrungsmittelzusammensetzungen, welche zum Ersatz von Milchprodukten verwendet werden können, beispielsweise Nahrungsmittelzusammensetzungen, welche auf zu Milchproteinen alternativen Proteinen basieren. Insbesondere besteht ein Bedarf an veganen Nahrungsmittelzusammensetzungen.

Darüber hinaus hat sich herausgestellt, dass die zur Verarbeitung von Milchprodukten verwendeten Verfahren bei der Verarbeitung von Nahrungsmittelzusammensetzungen mit alternativen Proteinen, insbesondere bei der Verarbeitung von veganen Nahrungsmittelzusammensetzungen, oft zu unbefriedigenden Produkteigenschaften oder zu einem Mehraufwand an Proteinen oder Verdickungsmitteln führen. Beispielsweise werden oft Endprodukte erhalten, die optisch sichtbare Partikel und eine raue Produktstruktur aufweisen. Darüber hinaus können die derart verarbeiteten Nahrungsmittelzusammensetzungen mit alternativen Proteinen eine Partikelreaggregationsneigung und eine damit einhergehende ungenügende Lagerstabilität aufweisen.

Angesichts der vorstehend beschriebenen Probleme im Stand der Technik liegt der Erfindung die Aufgabe zugrunde, Verfahren zum Verarbeiten von Nahrungsmittelzusammensetzungen bereitzustellen, mit denen gewünschte Produkteigenschaften ohne übermäßigen Aufwand erreicht werden können. Darüber hinaus liegt der Erfindung die Aufgabe zugrunde, Nahrungsmittelzusammensetzungen mit gewünschten Produkteigenschaften bereitzustellen.

Erfindungsgemäß wird diese Aufgabe durch ein Verfahren zum Verarbeiten einer Nahrungsmittelzusammensetzung gelöst, welches die folgenden Schritte umfasst:
i) Bereitstellen einer vorzugsweise veganen Mischung, die ein oder mehrere Proteine, ausgewählt aus pflanzlichen Proteinen, mikrobiellen Proteinen, Proteinen aus Makroalgen, Pilzproteinen, rekombinanten Proteinen und Kombinationen davon, umfasst; wobei die Mischung vorzugsweise eine wässrige Dispersion oder wässrige Lösung, insbesondere ein veganes Milchprodukt-Analog, ist;
ii) Drängen der Mischung durch eine von einer Mehrzahl von Öffnungen durchsetzte Verarbeitungseinrichtung von einer Retentatseite in Richtung auf eine Permeatseite, wobei die Mischung mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird.

Bei dem erfindungsgemäßen Verfahren passieren kleine Partikel der bereitgestellten vorzugsweise veganen Mischung die Öffnungen in der Verarbeitungseinrichtung ungehindert, während große Partikel durch die Einstreifeinrichtung schonend durch die Öffnungen der Verarbeitungseinrichtung gedrückt werden. Gleichzeitig werden die Öffnungen durch die Bewegung der Einstreifeinrichtung längs der Retentatseite kontinuierlich frei gehalten. Dabei erfolgt die Bewegung der Einstreifeinrichtung vorzugsweise in schleifender Anlage an der Retentatseite der Verarbeitungseinrichtung, um so eine besonders wirkungsvolle Reinigung der Öffnungen der Verarbeitungseinrichtung zu erhalten.

Die Erfindung geht dabei auf die Erkenntnis zurück, dass es bei der Verarbeitung von Nahrungsmittelzusammensetzungen mit alternativen Proteinen, insbesondere veganen Nahrungsmittelzusammensetzungen, beispielsweise rührjoghurtähnlichen Produkten auf der Basis von Milchanalogen, bei der Verwendung von zur Verarbeitung von Milchprodukten verwendeten Verfahren im Vergleich zu den bei den Milchprodukten erzielten Partikelgrößenverteilungen nach der Anwendung des Glättungsverfahrens zu einer Verschiebung der Partikelgrößenverteilung zu größeren Partikeln, insbesondere zu einer Reaggregation von Partikeln, kommen kann. Bei Milchprodukten kann es vorteilhaft sein, die mittlere Partikelgröße möglichst groß zu wählen. Es hat sich herausgestellt, dass die mit der Reaggregation einhergehende Verschiebung der Partikelgrößenverteilung zu größeren Partikeln bei Nahrungsmittelzusammensetzungen mit alternativen Proteinen zu unerwünschten Produkteigenschaften, wie einer optisch und sensorisch rauen Struktur, führen kann. Darüber hinaus kann die Verwendung von herkömmlichen Verfahren zur Zerkleinerung von Milchproduktpartikeln bei Nahrungsmittelzusammensetzungen mit alternativen Proteinen zu einem Mehraufwand an Proteinen, welche in hohen Konzentrationen unerwünschte Geschmacksausprägungen hervorrufen können, und/oder zu einem Mehraufwand an Verdickungsmitteln, welche vom Verbraucher oft als unerwünschte Zusatzstoffe angesehen werden, führen. Überraschenderweise wurde herausgefunden, dass durch die erfindungsgemäße Verwendung einer längs der Retentatseite der Verarbeitungseinrichtung bewegbaren Einstreifeinrichtung Nahrungsmittelzusammensetzungen, welche zu Milchproteinen alternative Proteine aufweisen, mit gewünschten Produkteigenschaften, beispielsweise Nahrungsmittelzusammensetzungen mit einer glatten und festen Produktstruktur, erhalten werden können. Darüber hinaus hat sich herausgestellt, dass überraschenderweise bei einem Einsatz des aus EP2266412 B1 im Zusammenhang mit der Verarbeitung von Milchprodukten bekannten Verfahrens, anders als bei einem Einsatz von anderen bekannten Verfahren zur Verarbeitung von Milchprodukten, wie z.B. Glättungsverfahren unter Verwendung von Zahnkranzdispergiermaschinen oder Glättungsventilen, bei der Verarbeitung von Produkten auf Basis von alternativen Proteinen, insbesondere veganen Produkten, die gewünschten Produkteigenschaften erhalten werden. Insbesondere hat sich herausgestellt, dass bei einem Einsatz des aus EP2266412 B1 im Zusammenhang mit der Verarbeitung von Milchprodukten bekannten Verfahrens, im Gegensatz zu einem Einsatz von anderen bekannten Verfahren zur Verarbeitung von Milchprodukten, überraschenderweise Produkte auf Basis von alternativen Proteinen, insbesondere vegane Produkte, erhalten werden können, welche eine über die Lagerdauer gleichbleibende Partikelgrößenverteilung, also eine stabile Partikelgrößenverteilung, aufweisen. Es hat sich herausgestellt, dass bei einem Einsatz des aus EP2266412 B1 im Zusammenhang mit der Verarbeitung von Milchprodukten bekannten Verfahrens, im Vergleich zu anderen im Zusammenhang mit der Verarbeitung von Milchprodukten bekannten Verfahren, bei der Verarbeitung von Produkten auf Basis von alternativen Proteinen, insbesondere veganen Produkten, eine Neigung zur Partikelreaggregation reduziert werden kann. Es hat sich darüber hinaus herausgestellt, dass Produkte auf Basis von alternativen Proteinen, insbesondere vegane Produkte, mit besonders bevorzugten Produkteigenschaften, wie beispielsweise einer monomodalen und stabilen Partikelgrößenverteilung, erhalten werden können, wenn die Verarbeitungsparameter entsprechend angepasst werden, beispielsweise durch die Wahl einer entsprechenden Fläche bzw. Ausdehnung der Öffnungen der Verarbeitungseinrichtung.

Die Kombination der Öffnungen aufweisenden Verarbeitungseinrichtungen, welche für die pflanzliche Proteine, mikrobielle Proteine, Pilzproteine und/oder rekombinante Proteine umfassende Mischung durchlässig ist, mit der mechanischen Einstreifeinrichtung macht davon Gebrauch, dass die bei Filtern üblicherweise entstehende Filterdeckschicht bzw. Ablagerungsschicht bzw. der Filterkuchen mit entsprechender Porosität und sich daraus ergebendem Ablagerungswiderstand, abgetragen bzw. abgestreift wird, so dass es zu keinem Filterkuchenaufbau kommt und somit im Wesentlichen die Geometrie der Öffnungen in der Verarbeitungseinrichtung die Partikelgröße und -verteilung beeinflusst.

Im Verlauf eines erfindungsgemäßen Verfahrens zum Verarbeiten einer Nahrungsmittelzusammensetzung wird die ein oder mehrere Proteine, ausgewählt aus pflanzlichen Proteinen, mikrobiellen Proteinen, Pilzproteinen, rekombinanten Proteinen und Kombinationen davon, umfassende Mischung, wahlweise nach einem Säuern und /oder nach einem anderen Dicklegen der Mischung, durch die Verarbeitungseinrichtung gedrängt. Dabei sammeln sich die größeren Partikel an den Öffnungen und werden aufgrund ihrer nur geringen Festigkeit mit Hilfe der Einstreifeinrichtung durch die Öffnungen geschoben und somit gezielt zerkleinert. Die Partikelgrößenverteilung kann durch das erfindungsgemäße Verfahren definiert beeinflusst werden und es stellen sich die folgenden Vorteile ein:

Da der Bildung des Filterkuchens entgegengewirkt wird, kann die Partikelzerkleinerung kontinuierlich bei gleichbleibender Qualität über mehrere Stunden ohne Notwendigkeit eines Wechselns oder der Reinigung der Verarbeitungseinrichtung betrieben werden, weil es durch Einsatz der Einstreifeinrichtung nicht zur Bildung einer Ablagerungsschicht kommt. Die maximale Partikelgröße und Partikelgrößenverteilung kann insbesondere durch die Wahl der Größe und/oder der Geometrie der Öffnungen in der Verarbeitungseinrichtung gezielter eingestellt werden und über mehrere Stunden bei kontinuierlichem Betrieb eingehalten werden.

Der Energieeintrag, die Schubspannung und somit die mechanische Belastung der recht labilen Partikel wird durch Einsatz der Einstreifeinrichtungen reduziert. Darüber hinaus kann die Breite der Partikelgrößenverteilung reduziert werden, was zu einer homogeneren Suspension führt. Dies hat auch zur Folge, dass die maximale Packungsdichte der Suspension reduziertwird, was dann zu einer höheren Viskosität führt. Auch das trägt zur Verbesserung der Produkteigenschaften bei.

Bei Einsatz des erfindungsgemäßen Verfahrens können optisch sichtbare und sensorisch wahrnehmbare größere Partikel verhindert werden. Darüber hinaus wird die Stabilität der Nahrungsmittelzusammensetzung positiv beeinflusst. Eine Reaggregation von Partikeln in der Nahrungsmittelzusammensetzung mit alternativen Proteinen kann unter Einsatz des erfindungsgemäßen Verfahrens reduziert bzw. verhindert werden, so dass eine geeignete Lagerstabilität erzielt wird.

Im Hinblick auf die zuverlässige Ablösung von sich auf der Retentatseite der Verarbeitungseinrichtung anlagernden Partikeln unter gleichzeitiger Vermeidung einer übermäßigen mechanischen Belastung dieser Partikel hat es sich als günstig erwiesen, wenn die Einstreifeinrichtung unter Bildung eines sich in einer der Bewegungsrichtung der Einstreifeinrichtung entgegengesetzten Richtung verjüngenden Keilspalts zwischen einer der Verarbeitungseinrichtung zugewandten Begrenzungsfläche der Einstreifeinrichtung und der retentatseitigen Begrenzungsfläche der Verarbeitungseinrichtung längs der retentatseitigen Begrenzungsfläche bewegt wird. Bei dieser Bewegungsführung gelangen die durch die Verarbeitungseinrichtung zu drängenden Partikel von einem Bereich mit einer großen Spaltbreite zwischen Einstreifeinrichtung und Verarbeitungseinrichtung im Verlauf der Bewegung der Einstreifeinrichtung in einen Bereich mit geringerer Spaltbreite, so dass bei Erreichen eines Spalts, bei dem eine genügend große Kraft auf die Partikel zur Verfügung gestellt wird, um diese durch die Öffnungen in der Verarbeitungseinrichtung zu drängen, ein Durchdringen der Öffnungen in der Verarbeitungseinrichtung erfolgt, ohne dass dazu mehr Kraft aufwendet wird, als zwingend erforderlich ist.

Bei dem erfindungsgemäßen Verfahren kann die retentatseitige Begrenzungsfläche der Verarbeitungseinrichtung beispielsweise mit einer Frequenz von 0,05 bis 60 Hz, insbes. 0,1 bis 1 Hz, von der Einstreifeinrichtung überstrichen werden. Im Hinblick auf eine zuverlässige Vermeidung der Bildung eines Filterkuchens auf der Verarbeitungseinrichtung unter gleichzeitiger Sicherstellung einer schonenden Behandlung der zu verarbeitenden Mischung hat es sich als günstig erwiesen, wenn die retentatseitige Begrenzungsfläche der Verarbeitungseinrichtung mit einer Frequenz von 0,05 bis 60 Hz, insbes. 0,1 bis 1 Hz, von der Einstreifeinrichtung überstrichen wird. Dabei können zwei oder mehr jeweils mit einer geringeren Frequenz über die retentatseitige Begrenzungsfläche der Verarbeitungseinrichtung streifende Einstreifelemente der Einstreifeinrichtung zum Einsatz kommen.

Zum Erhalt eines homogenen Endprodukts hat es sich als günstig erwiesen, wenn die Verarbeitungseinrichtung einen von einer Mehrzahl von Öffnungen vorgegebener Größe und Geometrie durchsetzten, vorzugsweise starren, Körper aufweist. Die Verwendung eines starren Körpers als von den Öffnungen durchsetzte Verarbeitungseinrichtung hat den Vorteil, dass durch die streifende Anlage der Einstreifeinrichtung an der Verarbeitungseinrichtung definierte Kraftverhältnisse bereitgestellt werden können, welche die Beaufschlagung der Partikel der bereitgestellten Mischung mit einer übermäßigen Kraft zu vermeiden helfen. Im Rahmen der Erfindung können beispielsweise Lochbleche als Verarbeitungseinrichtung eingesetzt werden.

Es hat sich in Bezug auf den Erhalt homogener Produkteigenschaften als günstig erwiesen, wenn die Öffnungen vorzugsweise eine im Wesentlichen kreisförmige, ovale oder rechteckige Form aufweisen. Beispielsweise kann die Verarbeitungseinrichtung einen von einer Mehrzahl von kreisförmigen, ovalen oder rechteckigen Öffnungen durchsetzten, vorzugsweise starren, Körper aufweisen, der insbesondere als Lochblech mit einer Mehrzahl von im Wesentlichen kreisförmigen, ovalen oder rechteckigen Öffnungen, beispielsweise in Form eines Musters aus Öffnungen, ausgeführt sein kann. Rechteckige Öffnungen können beispielsweise im Wesentlichen quadratische Öffnungen sein. Vorteilhafte Nahrungsmittelzusammensetzungen können jedoch auch mit Öffnungen erzielt werden, welche andere Formen aufweisen, beispielsweise im Wesentlichen trapezförmige oder schlitzförmige Öffnungen. Die Mehrzahl von Öffnungen der Verarbeitungseinrichtung können beispielsweise jeweils ein Seitenverhältnis von ≤ 2:1, insbesondere ein Seitenverhältnis von ≤ 1,5:1, aufweisen. Das Seitenverhältnis ist ein Verhältnis einer größten Abmessung der Öffnung zu einer kleinsten Abmessung der Öffnung, insbesondere ein Verhältnis einer größten Ausdehnung der Öffnung zu einer kleinsten Ausdehnung der Öffnung. Es hat sich herausgestellt, dass das Verfahren die Nahrungsmittelzusammensetzung mit alternativen Proteinen besonders schonend verarbeitet und homogene Produkteigenschaften erzielt werden können, wenn die Öffnungen jeweils ein Seitenverhältnis von ≤ 2:1, insbesondere ein Seitenverhältnis von ≤ 1,5:1, aufweisen.

Darüber hinaus hat sich herausgestellt, dass die erhaltene Nahrungsmittelzusammensetzung besonders vorteilhafte Produkteigenschaften, insbesondere eine optische und sensorische Glattheit, aufweist, wenn die Öffnungen der Verarbeitungseinrichtung jeweils eine Fläche von weniger als 4420 µm², insbesondere eine Fläche in einem Bereich von 175 µm² bis 2830 µm² vorzugsweise eine Fläche in einem Bereich von 490 µm² bis 1595 µm², aufweisen. Unter Verwendung von Öffnungen mit entsprechender Fläche können insbesondere vegane Nahrungsmittelzusammensetzung hergestellt werden, welche homogene Produkteigenschaften und eine über die Lagerdauer im Wesentlichen gleichbleibende Partikelgrößenverteilung aufweisen. In Bezug auf das Erzielen einer monomodalen Partikelgrößenverteilung hat es sich als vorteilhaft erwiesen, wenn die Öffnungen der Verarbeitungseinrichtung jeweils eine Fläche in einem Bereich von 175 µm² bis 2830 µm², vorzugsweise eine Fläche in einem Bereich von 490 µm² bis 1595 µm², aufweisen.

Die Verarbeitungseinrichtung kann beispielsweise so ausgestaltet sein, dass ein Verhältnis zwischen einer Öffnungsfläche und einer nicht-Öffnungsfläche der Verarbeitungseinrichtung 1,5:1 oder weniger, vorzugsweise 1:1 oder weniger, beträgt. Das Verhältnis kann auch 1:10 oder weniger, wie etwa 1:20 oder weniger betragen. Die Öffnungsfläche der Verarbeitungseinrichtung ist die Summe der Flächen der in der Verarbeitungseinrichtung vorhandenen Mehrzahl von Öffnungen. Die nicht-Öffnungsfläche der Verarbeitungseinrichtung entspricht einer Fläche der flächigen Erstreckung der Verarbeitungseinrichtung, von der die Summe der Flächen der in der Verarbeitungseinrichtung vorhandenen Mehrzahl von Öffnungen subtrahiert wird. Die Verarbeitungseinrichtung kann beispielsweise so ausgestaltet sein, dass die Gesamtfläche der Mehrzahl von Öffnungen maximal 50%, vorzugsweise maximal 30%, der Gesamtfläche der Verarbeitungseinrichtung einnimmt. Die Gesamtfläche der Öffnungen kann auch 20 % oder weniger, wie etwa 10% oder weniger der Gesamtfläche einnehmen. Es hat sich in Bezug auf eine für das Erzielen von Nahrungsmittelzusammensetzungen mit vorteilhaften Partikelgrößenverteilungen optimale Scherbeanspruchung als günstig erwiesen, wenn die Verarbeitungseinrichtung ein entsprechendes Verhältnis zwischen einer Öffnungsfläche und einer nicht-Öffnungsfläche bzw. einen entsprechenden prozentualen Anteil der Gesamtfläche der Mehrzahl von Öffnungen an der Gesamtfläche der Verarbeitungseinrichtung aufweist.

Überraschenderweise wurde festgestellt, dass eine in einem vollmundigen Mundgefühl resultierende Kombination aus Viskosität und Produktglätte von Nahrungsmittelzusammensetzungen auf Basis von alternativen Proteinen, wie beispielsweise auf Basis von Milchprodukt-Analoga, entgegen den Erwartungen bei sehr kleinen mittleren Partikelgrößen erzielt wird. Zum Erzielen von Produkten mit gewünschten Produkteigenschaften, beispielsweise einer als angenehm empfundenen Produktkonsistenz sowie einer glatten Produktoberfläche, hat es sich als vorteilhaft erwiesen, wenn die Partikelgrößenverteilung der verarbeiteten Nahrungsmittelzusammensetzung im Wesentlichen monomodal ist. Im Hinblick auf das Erreichen einer monomodalen und über die Lagerdauer im Wesentlichen gleichbleibenden Partikelgrößenverteilung hat es sich als besonders vorteilhaft herausgestellt, wenn die Öffnungen eine größte Ausdehnung, beispielsweise einen Öffnungsdurchmesser, von weniger als 75 µm, insbesondere in einem Bereich von 15 bis 60 µm, vorzugsweise in einem Bereich von 25 bis 45 µm, aufweisen. Beispielsweise können die Öffnungen eine größte Ausdehnung von etwa 35 µm aufweisen. Insbesondere hat es sich in Bezug auf das Erzielen von Nahrungsmittelzusammensetzungen mit einem für den Verbraucher ansprechenden glänzenden Erscheinungsbild der Produktoberfläche sowie einer sensorisch als angenehm empfundenen Produktviskosität als günstig erwiesen, wenn die Öffnungen eine größte Ausdehnung, beispielsweise einen Öffnungsdurchmesser, von weniger als 75 µm, insbesondere in einem Bereich von 15 bis 60 µm, aufweisen. Es hat sich herausgestellt, dass besonders vorteilhafte Nahrungsmittelzusammensetzungen, welche eine gewünschte Konsistenz, eine als angenehm empfundene Viskosität, ein glänzendes Erscheinungsbild sowie eine hohe Lagerstabilität aufweisen, erhalten werden können, wenn die Öffnungen eine größte Ausdehnung, beispielsweise einen Öffnungsdurchmesser, in einem Bereich von 15 bis 60 µm, vorzugsweise in einem Bereich von 25 bis 45 µm, beispielsweise von etwa 35 µm, aufweisen. Die Öffnungen weisen vorzugsweise eine größte Ausdehnung von 60 µm oder weniger, besonders bevorzugt von 45 µm oder weniger auf. Die Öffnungen können beispielsweise eine größte Ausdehnung von 10 µm oder mehr, vorzugsweise von 15 µm oder mehr, insbesondere von 25 µm oder mehr, aufweisen.

Der Begriff "größte Ausdehnung", wie er hier im Kontext von Öffnungen verwendet wird, bezieht sich vorzugsweise auf die Länge der längsten Geraden durch die Öffnung, beispielsweise auf die Länge der Geraden, welche zwei am weitesten entfernt liegende Punkte des Randes der Öffnung miteinander verbindet. Die größte Ausdehnung der Öffnungen kann beispielsweise 150 µm oder weniger, insbesondere 100 µm oder weniger, vorzugsweise weniger als 75 µm, sein. Die Öffnungen sind vorzugsweise jeweils derart, insbesondere derart konvex, berandet, dass alle zwei Punkte des Randes verbindenden Geraden keinen anderen Punkt des Randes kreuzen. Beispielsweise können die Öffnungen im Wesentlichen kreisförmig ausgeführt sein, wobei die größte Ausdehnung vorzugsweise dem Durchmesser eines Kreises entspricht. Die größte Ausdehnung kann somit im Falle von im Wesentlichen kreisförmigen Öffnungen der Öffnungsdurchmesser sein. Im Sinne eines in Bezug auf die Scherbeanspruchung des Produktes schonenden Verfahrens hat es sich als vorteilhaft erwiesen, wenn die Öffnungen jeweils im Wesentlichen kreisförmig ausgeführt sind. Beispielsweise können die Öffnungen der mit einer Mehrzahl von Öffnungen durchsetzten Verarbeitungseinrichtung im Wesentlichen kreisförmig mit einheitlichem Durchmesser ausgeführt sein. Insbesondere können die Öffnungen im Wesentlichen kreisförmig mit einheitlichem Durchmesser ausgeführt sein und jeweils einen Öffnungsdurchmesser von weniger als 75 µm, insbesondere in einem Bereich von 15 bis 60 µm, vorzugsweise in einem Bereich von 25 bis 45 µm, aufweisen. Es hat sich herausgestellt, dass vorteilhafte Produkteigenschaften, insbesondere eine gewünschte Viskosität und eine hohe Lagerstabilität, erreicht werden können, wenn die Öffnungen einen Öffnungsdurchmesser von weniger als 75 µm, insbesondere in einem Bereich von 15 bis 60 µm, vorzugsweise in einem Bereich von 25 bis 45 µm, beispielweise von etwa 35 µm, aufweisen. Eine besonders vorteilhafte Partikelgrößenverteilung, insbesondere eine über die Lagerdauer stabile monomodale Partikelgrößenverteilung, kann beispielsweise mit Öffnungen mit einem Öffnungsdurchmesser in einem Bereich von 15 bis 60 µm, insbesondere in einem Bereich von 25 bis 45 µm, beispielweise von etwa 35 µm, erreicht werden. Überraschenderweise hat sich herausgestellt, dass unter Verwendung des erfindungsgemäßen Verfahrens, insbesondere unter Verwendung von Öffnungen mit einem Öffnungsdurchmesser von weniger als 75 µm, wie beispielsweise in einem Bereich von 15 bis 60 µm, eine gewünschte Produktfestigkeit auch ohne Zugabe von Verdickungsmitteln erzielt werden kann.

Das erfindungsgemäße Verfahren umfasst ein Bereitstellen einer vorzugsweise veganen Mischung, die ein oder mehrere Proteine, ausgewählt aus pflanzlichen Proteinen, mikrobiellen Proteinen, Pilzproteinen, rekombinanten Proteinen und Kombinationen davon, umfasst. Der Begriff "alternative Proteine", wie er hier im Kontext von Nahrungsmittelzusammensetzungen bzw. Mischungen verwendet wird, bezieht sich auf zu Milchproteinen alternative Proteine; vorzugsweise Proteine ausgewählt aus pflanzlichen Proteinen, mikrobiellen Proteinen, Pilzproteinen, rekombinanten Proteinen und Kombinationen davon; besonders bevorzugt vegane Proteine. Eine alternative Proteine umfassende Nahrungsmittelzusammensetzung bzw. eine alternative Proteine umfassende Mischung umfasst bevorzugt keine Proteine tierischen Ursprungs, insbesondere keine Milchproteine tierischen Ursprungs. Die in Schritt i) des erfindungsgemäßen Verfahrens bereitgestellte Mischung umfasst bevorzugt keine Proteine tierischen Ursprungs wie Milchproteine tierischen Ursprungs. Die in Schritt i) des erfindungsgemäßen Verfahrens bereitgestellte Mischung umfasst bevorzugt vegane Proteine, beispielsweise pflanzliche Proteine und/oder rekombinant hergestellte Proteine. Die in Schritt i) des erfindungsgemäßen Verfahrens bereitgestellte Mischung umfasst bevorzugt keine nicht-veganen Proteine. Proteine tierischen Ursprungs sind Proteine, welche von Tieren, wie z.B. Säugetieren oder Insekten, hergestellt werden/wurden, beispielsweise von einer Kuh hergestellte Milchproteine. Proteine tierischen Ursprungs umfassen vorzugsweise keine rekombinant hergestellten tierischen Proteine, insbesondere keine rekombinant hergestellten Milchproteine wie Caseine. Es hat sich herausgestellt, dass unter Verwendung der von einer Mehrzahl von Öffnungen durchsetzten Verarbeitungseinrichtung in Kombination mit Mischungen, welche ein oder mehrere pflanzliche Proteine, mikrobielle Proteine, Pilzproteine, rekombinante Proteine oder Kombinationen davon umfassen, Nahrungsmittelzusammensetzungen, insbesondere Milchprodukt-Ersatzprodukte, hergestellt werden können, welche strukturelle und sensorische Eigenschaften wie Milchprodukte, z.B. wie Joghurt aus Milch, aufweisen, sogar wenn sie als vegane Nahrungsmittelzusammensetzungen ausgeführt sind. Das erfindungsgemäße Verfahren ermöglicht unter Verwendung von Mischungen mit derartigen alternativen Proteinen, vegane Nahrungsmittelzusammensetzungen bereitzustellen, welche ein Mundgefühl hervorrufen, das mit dem von nicht-veganen Produkten, beispielsweise mit dem von herkömmlichen Joghurt aus Milch, vergleichbar ist. Die in Schritt i) des erfindungsgemäßen Verfahrens bereitgestellte Mischung umfasst vorzugsweise keine Inhaltsstoffe tierischen Ursprungs. Die in Schritt i) des erfindungsgemäßen Verfahrens bereitgestellte Mischung ist vorzugsweise eine vegane Mischung.

Das Bereitstellen der Mischung in Schritt i) des erfindungsgemäßen Verfahrens kann beispielsweise ein Bereitstellen einer wässrigen Dispersion oder einer wässrigen Lösung, z.B. eines Milchprodukt-Analogs, und wahlweise ein Zugeben von ein oder mehreren Proteinen, insbesondere in Form einer Flüssigkeit oder eines Pulvers, beispielsweise in Form eines Proteinkonzentrats oder Proteinisolats, zu der wässrigen Dispersion bzw. der wässrigen Lösung, umfassen. Das Bereitstellen der Mischung kann ein Bereitstellen eines Extraktes aus einem proteinhaltigen Rohstoff, beispielsweise einer Leguminose, z.B. Soja, umfassen. Insbesondere kann das Bereitstellen der Mischung in Schritt i) des erfindungsgemäßen Verfahrens ein Bereitstellen einer Mischung, welche ein Proteinkonzentrat oder Proteinisolat umfasst oder ist, umfassen. Die ein oder mehreren Proteine der Mischung können wahlweise fermentativ oder enzymatisch, insbesondere durch partielle Hydrolyse, vorbehandelt sein. Es hat sich herausgestellt, dass mit derartigen Mischungen Nahrungsmittelzusammensetzungen mit vorteilhaften Produkteigenschaften, beispielsweise mit angenehmen sensorischen Eigenschaften, bereitgestellt werden können. Das Bereitstellen der Mischung in Schritt i) des erfindungsgemäßen Verfahrens kann beispielsweise ein Bereitstellen von Wasser, einer wässrigen Dispersion oder einer wässrigen Lösung und ein Zugeben von ein oder mehreren Proteinen, insbesondere in Form einer Flüssigkeit oder eines Pulvers, beispielsweise in Form eines Proteinkonzentrats oder Proteinisolats, zu dem Wasser, der wässrigen Dispersion bzw. der wässrigen Lösung, umfassen; wobei, bevorzugt, die bereitgestellte Mischung fermentierbare Kohlenhydrate umfasst.

Die Mischung kann beispielsweise ein oder mehrere pflanzliche Proteine, ein oder mehrere mikrobielle Proteine, ein oder mehrere Pilzproteine, ein oder mehrere rekombinante Proteine, oder eine Kombination davon, wie beispielsweise pflanzliche Proteine und mikrobielle Proteine, pflanzliche Proteine und Pilzproteine, pflanzliche Proteine und rekombinante Proteine, mikrobielle Proteine und Pilzproteine, mikrobielle Proteine und rekombinante Proteine, Pilzproteine und rekombinante Proteine, oder pflanzliche Proteine, mikrobielle Proteine, Pilzproteine und rekombinante Proteine, umfassen. Die Proteine können wahlweise von genmodifizierten Mikroorganismen und/oder Zellkulturen hergestellt sein. Die Mischung umfasst vorzugsweise ausschließlich Proteine, welche für eine Nahrungsmittelzusammensetzung geeignet sind, besonders bevorzugt keine toxischen und/oder allergenen Proteine. Die Mischung umfasst vorzugsweise keine Milchproteine tierischen Ursprungs, besonders bevorzugt keine Milchproteine tierischen Urprungs. Die Mischung ist vorzugsweise eine vegane Mischung, welche keine Inhaltsstoffe tierischen Ursprungs enthält.

Mikrobielle Proteine sind vorzugsweise durch Mikroorganismen und/oder in Zellkultur hergestellte Proteine. Mikrobielle Proteine können beispielsweise bakterielle Proteine, Proteine einzelliger Pilze, insbesondere Hefeproteine, Algenproteine, Makroalgenproteine oder Kombinationen davon umfassen. Mikrobielle Proteine können beispielsweise nicht-maritimen Ursprungs, z.B. Hefeproteine, oder maritimen Ursprungs, z.B. Algenproteine, sein. Pilzproteine können beispielsweise Proteine mehrzelliger Pilze, Proteine einzelliger Pilze, Proteine coenocytischer Pilze oder Kombinationen davon, insbesondere Proteine mehrzelliger Pilze, umfassen. Die pflanzlichen Proteine können jegliche pflanzlichen Proteine umfassen, welche für Nahrungsmittelzusammensetzungen geeignet sind. Es hat sich in Bezug auf die sensorischen Eigenschaften und insbesondere den Geschmack der Nahrungsmittelzusammensetzungen als besonders vorteilhaft erwiesen, wenn die Mischung pflanzliche Proteine, vorzugsweise Leguminosenproteine, insbesondere Erbsenproteine, Sojaproteine, Bohnenproteine, Linsenproteine, Lupinenproteine, Kichererbsenproteine oder eine Kombination davon, umfasst. Bohnenproteine können beispielsweise Ackerbohnenproteine sein. Beispielsweise kann die bereitgestellte Mischung eine vorzugsweise vegane Mischung, welche Erbsenproteine umfasst, sein. Die Mischung kann beispielsweise pflanzliche Albumine und/oder pflanzliche Globuline, insbesondere Vicilin, Legumin, β-Conglycinin, Glycinin, Zein und/oder Gliadin umfassen. Insbesondere kann die Mischung Vicilin und Legumin, beispielsweise in einem Verhältnis von 0,05:1 bis 2:1, vorzugsweise 0,2:1 bis 1,5:1, umfassen. Es hat sich herausgestellt, dass Leguminosenproteine, insbesondere bei einer Fermentation, Säuregele bilden können, und die Fähigkeit zur Säuregelbildung für die Herstellung von Ersatzprodukten fermentierter Milchprodukte förderlich ist. Unter Verwendung des erfindungsgemäßen Verfahrens können mit Mischungen, welche Leguminosenproteine enthalten, insbesondere nach einer Säuregelbildung, effizient Ersatzprodukte für fermentierte Milchprodukte, wie beispielsweise Joghurtersatzprodukte, hergestellt werden. Die Verwendung von Mischungen mit Leguminosenproteinen bei dem erfindungsgemäßen Verfahren hat insbesondere den Vorteil, dass unter Verwendung von Leguminosenproteinen effizient Säuregele gebildet werden können und auf eine Zugabe von Verdickungsmitteln, welche vom Verbraucher oft als unerwünscht angesehen werden, verzichtet werden kann. Überraschenderweise hat sich herausgestellt, dass unter Verwendung des erfindungsgemäßen Verfahrens eine gewünschte Produktfestigkeit ohne Zugabe von Verdickungsmitteln erzielt werden kann. Rekombinante Proteine sind biotechnologisch mit Hilfe von gentechnisch veränderten Organismen und/oder Zellen hergestellte Proteine. Rekombinante Proteine können vegane tierische Proteine umfassen, welche beispielsweise mit Hilfe von gentechnisch veränderten Mikroorganismen und/oder Zellen hergestellt werden, beispielsweise unter Verwendung von eukaryotischen Zellen oder prokaryotischen Zellen hergestellte tierische Proteine, wie Caseine.

Das erfindungsgemäße Verfahren kann beispielsweise ein Verfahren zum Verarbeiten einer veganen Nahrungsmittelzusammensetzung sein, welche kein Erzeugnis tierischen Ursprungs ist oder umfasst und bei der auf allen Produktions- und Verarbeitungsstufen keine Zutaten, die tierischen Ursprungs sind, in verarbeiteter oder unverarbeiteter Form zugesetzt werden. Die mit dem erfindungsgemäßen Verfahren verarbeitete Nahrungsmittelzusammensetzung ist vorzugsweise ein veganes Joghurtersatzprodukt, ein veganes Trinkjoghurtersatzprodukt, ein veganes Kefirersatzprodukt, ein veganes Buttermilchersatzprodukt, ein veganes Dickmilchersatzprodukt oder ein veganes Quarkersatzprodukt. Die Nahrungsmittelzusammensetzung kann eine gesäuerte Nahrungsmittelzusammensetzung, vorzugsweise eine gesäuerte vegane Nahrungsmittelzusammensetzung, sein. Die in Schritt i) des erfindungsgemäßen Verfahrens bereitgestellte Mischung kann eine gesäuerte Mischung, vorzugsweise eine gesäuerte vegane Mischung, sein.

Die bereitgestellte Mischung ist vorzugsweise eine wässrige Dispersion oder eine wässrige Lösung, besonders bevorzugt eine wässrige Dispersion. Beispielsweise kann die disperse Phase der Mischung Wasser umfassen und die Mischung in der dispersen Phase dispergierte Protein- und/oder Fettpartikel aufweisen. Für den Verarbeitungsprozess hat es sich als vorteilhaft erwiesen, wenn die Mischung ein vorzugsweise veganes Milchprodukt-Analog umfasst. Ein Milchprodukt-Analog kann beispielsweise eine wässrige Dispersion oder wässrige Lösung sein, welche ein oder mehrere Proteine und wahlweise weitere Inhaltsstoffe enthält, wobei die Proteine und die weiteren Inhaltsstoffe, falls vorhanden, nicht aus Milch stammen. Insbesondere kann das Milchprodukt-Analog ein Milchprodukt-Analog sein, welches infolge eines Säuerns durch Fermentieren und/oder Säuerungsmittel auf einen pH-Wert in einem Bereich von pH 3,6 bis pH 4,8 ein Säuregel und/oder eine pastöse Masse bilden kann. Das Milchprodukt-Analog kann ein Milch-Analog sein, beispielsweise Erbsenmilch, Sojamilch, Bohnenmilch, Linsenmilch, Lupinenmilch, Kichererbsenmilch, Hafermilch, Mandelmilch, Reismilch, Kokosmilch oder eine Kombination davon; wahlweise ein Milch-Analog, welches ein Proteinkonzentrat oder Proteinisolat umfasst. Es hat sich im Hinblick auf den Nährstoffgehalt und den Geschmack der Nahrungsmittelzusammensetzung als vorteilhaft erwiesen, wenn das Milchprodukt-Analog ein Milch-Analog, insbesondere Erbsenmilch, Sojamilch, Bohnenmilch, Linsenmilch, Lupinenmilch, Kichererbsenmilch, Hafermilch, Mandelmilch, Reismilch, Kokosmilch oder eine Kombination davon, ist.

Die in Schritt i) des erfindungsgemäßen Verfahrens bereitgestellte Mischung kann insbesondere ein Milchprodukt-Analog, vorzugsweise Erbsenmilch, Sojamilch, Bohnenmilch, Linsenmilch, Lupinenmilch, Kichererbsenmilch, Hafermilch, Mandelmilch, Reismilch, Kokosmilch, oder eine Kombination davon, umfassen oder sein; wobei das Milchprodukt-Analog wahlweise ein Proteinkonzentrat oder Proteinisolat umfasst. Besonders bevorzugt ist das Milchprodukt-Analog eine Erbsenmilch; wahlweise umfassend ein Proteinkonzentrat oder Proteinisolat. Das Milchprodukt-Analog kann insbesondere Leguminosenproteine, beispielsweise Erbsenproteine, Sojaproteine, Bohnenproteine, Linsenproteine, Lupinenproteine, Kichererbsenproteine oder eine Kombination davon umfassen oder daraus bestehen. Es hat sich herausgestellt, dass unter Verwendung der von einer Mehrzahl von Öffnungen, beispielsweise jeweils mit einer größten Ausdehnung von weniger als 75 µm, durchsetzten Verarbeitungseinrichtung, in Kombination mit einer Mischung, welche Leguminosenproteine, beispielsweise Erbsenproteine, Sojaproteine, Bohnenproteine, Linsenproteine, Lupinenproteine, Kichererbsenproteine oder eine Kombination davon umfasst, Nahrungsmittelzusammensetzungen, insbesondere vegane Nahrungsmittelzusammensetzungen, hergestellt werden können, welche eine optische und sensorische Glattheit sowie eine geeignete Lagerstabilität aufweisen.

Erfindungsgemäß kann in Schritt i) des erfindungsgemäßen Verfahrens eine Mischung bereitgestellt werden, die ein Milchprodukt-Analog umfasst, und die zusätzlich weitere Proteine, ausgewählt aus pflanzlichen Proteinen, mikrobiellen Proteinen, Pilzproteinen, rekombinanten Proteinen und Kombinationen davon, umfasst. Ein Milchprodukt-Analog ist vorzugsweise vegan. Ein Milchprodukt-Analog umfasst vorzugsweise keine Milchproteine tierischen Ursprungs, besonders bevorzugt keine Milchproteine, insbesondere keine Milchproteine und keine anderen Milch-Bestandteile. Die in Schritt i) des erfindungsgemäßen Verfahrens bereitgestellte Mischung umfasst vorzugsweise keine Milchproteine tierischen Ursprungs, besonders bevorzugt keine Milchproteine, insbesondere keine Milchproteine und keine anderen Milch-Bestandteile. Die in Schritt i) des erfindungsgemäßen Verfahrens bereitgestellte Mischung kann eine gesäuerte Mischung sein. Das Bereitstellen einer Mischung in Schritt i) des erfindungsgemäßen Verfahrens kann erfindungsgemäß das Bereitstellen einer gesäuerten Mischung, insbesondere einer gesäuerten Mischung, welche ein Milchprodukt-Analog umfasst oder ist, umfassen. Eine gesäuerte Mischung ist vorzugsweise durch Fermentieren der Mischung unter Verwendung von Mikroorganismen, insbesondere unter Verwendung von Milchsäurebakterien, und/oder durch ein Säuerungsmittel, insbesondere durch eine organische Säure und/oder Glucono-δ-lacton, gesäuert. Die Mischung kann wahlweise vor einem Säuern erhitzt werden. Das Erhitzen kann beispielsweise unerwünschte Mikroorganismen abtöten und dadurch eine kontrollierte Vermehrung der als Starterkultur zugesetzten Mikroorganismen ermöglichen. Die Erhitzungsbedingungen können wahlweise so gewählt werden, dass unerwünschte Mikroorganismen abgetötet werden und/oder dass in der Mischung vorhandene Proteine denaturieren. Ein Denaturieren von Proteinen der Mischung kann eine Ausbildung eines Säuregels und die Festigkeit des Säuregels begünstigen. Das erfindungsgemäße Verfahren kann ein Erhitzen der Mischung umfassen. Es hat sich herausgestellt, dass ein Erhitzen der Mischung eine durch Säuern der Mischung erzielte Gelbildung fördern kann.

Es hat sich herausgestellt, dass Nahrungsmittelzusammensetzungen mit gewünschter Viskosität und geeigneter Lagerstabilität insbesondere mit einer Mischung, die einen Proteingehalt in einem Bereich von 1 bis 15 Gew.-%, vorzugsweise in einem Bereich von 2,5 bis 6 Gew.-%, aufweist, bereitgestellt werden können. Mischungen mit dem entsprechenden Proteingehalt haben darüber hinaus den Vorteil, dass diese die Bedürfnisse von Verbrauchern, welche auf eine hohe Proteinaufnahme achten, beispielsweise von Sportlern, befriedigen können.

Im Hinblick auf das Erzielen eines guten Geschmacks hat es sich als günstig erwiesen, wenn die Mischung einen Fettgehalt in einem Bereich von 0,1 bis 10 Gew.-% aufweist. Die Mischung kann beispielsweise Fett in Form von Kokosnussöl, Sonnenblumenöl, Rapsöl, Palmöl, Palmkernöl, Färberdistelöl oder einer Kombination davon umfassen. Das Bereitstellen der Mischung kann beispielsweise ein Bereitstellen eines Milchprodukt-Analogs mit einem Fettgehalt in einem Bereich von 0,1 bis 10 Gew.-% umfassen. Das Fett in der Mischung bzw. in der Nahrungsmittelzusammensetzung kann sowohl pflanzlichen, mikrobiellen, als auch tierischen Ursprungs sein und ist vorzugsweise pflanzliches Fett, beispielsweise Fett in Form von Kokosnussöl, Sonnenblumenöl, Rapsöl, Palmöl, Palmkernöl und/oder Färberdistelöl. In der Mischung vorhandenes Fett kann ein oder mehrere Fettfraktionen umfassen. Das Fett kann wahlweise modifiziertes, insbesondere gehärtetes Fett umfassen. Fett kann der Mischung beispielsweise in Form von Öl, vorzugsweise unter Anwendung von Scherkräften, beispielsweise durch einen Hochdruckhomogenisator, und/oder in Form eines als Emulsion oder Pulver vorliegenden fetthaltigen Vorproduktes, beispielsweise in Form einer Kokosmilch, hinzugegeben werden. Beispielsweise kann der Mischung Fett in Form von Kokosmilch, z.B. Kokosmilch mit einem Fettgehalt in einem Bereich von 15 bis 25 Gew.-%, zugegeben werden. Vorzugsweise wird das Fett in einer wässrigen Phase der Mischung emulgiert, wahlweise unter Einsatz von Emulgatoren. Die Mischung kann beispielsweise Fett mit einer Fetttröpfchengröße in einem Bereich von 0,1 µm und 10 µm, vorzugsweise in einem Bereich von 0,1 µm und 4 µm, aufweisen. Es hat sich herausgestellt, dass durch eine Lichtbrechung an fein dispergierten Fetttröpfchen eine weißere und somit ansprechende Farbe der Mischung bzw. der Nahrungsmittelzusammensetzung erzielt werden kann. So kann ein Zugeben von Fett zu einem optisch ansprechenden Erscheinungsbild des Produktes führen.

Die mit dem erfindungsgemäßen Verfahren verarbeitete Nahrungsmittelzusammensetzung kann eine gesäuerte Nahrungsmittelzusammensetzung, beispielsweise ein veganes Joghurtersatzprodukt, veganes Trinkjoghurtersatzprodukt, veganes Kefirersatzprodukt, veganes Buttermilchersatzprodukt, veganes Dickmilchersatzprodukt oder veganes Quarkersatzprodukt, sein. Für die Verarbeitung von Nahrungsmittelzusammensetzungen, insbesondere gesäuerten Nahrungsmittelzusammensetzungen, wie veganen Joghurtersatzprodukten, veganen Trinkjoghurtersatzprodukten, veganen Kefirersatzprodukten, veganen Buttermilchersatzprodukten, veganen Dickmilchersatzprodukten oder veganen Quarkersatzprodukten, hat es sich als vorteilhaft erwiesen, wenn die in Schritt i) des erfindungsgemäßen Verfahrens bereitgestellte Mischung fermentierbare Kohlenhydrate, insbesondere fermentierbare Kohlenhydrate in einer Menge in einem Bereich von 0,1 bis 15 Gew.-%, vorzugsweise fermentierbare Kohlenhydrate in einer Menge in einem Bereich von 0,5 bis 5 Gew.-%, umfasst. Fermentierbare Kohlenhydrate sind Kohlenhydrate, die einen Fermentationsprozess ermöglichen und/oder fördern. Fermentierbare Kohlenhydrate können beispielsweise Monosaccharide, insbesondere Glukose, Fruktose oder Galaktose; Disaccharide, insbesondere Saccharose, Laktose, oder Maltose; Oligosaccharide; Säuren; Alkohole; Aldehyde; Ketone; Aminosäuren; Peptide; oder Kombinationen davon umfassen oder sein. Vorzugsweise enthält eine Mischung, welche durch Säuern, insbesondere durch Fermentieren, gesäuert wird, fermentierbare Kohlenhydrate. Die fermentierbaren Kohlenhydrate können von Mikroorganismen, beispielsweise Milchsäurebakterien, während dem Säuern durch Fermentieren umgesetzt werden. Fermentierbare Kohlenhydrate können in der Mischung vorhanden sein, der Mischung zugegeben werden und/oder unter Verwendung von Enzymen aus nicht fermentierbaren Kohlenhydraten, beispielweise Polysacchariden, in der Mischung produziert werden. Ein Säuern durch Fermentieren kann ein Umsetzen von nichtfermentierbaren Kohlenhydraten in fermentierbare Kohlenhydrate unter Verwendung von Enzymen umfassen.

Der Mischung kann eine geschmacksgebende Komponente zugegeben werden. Eine geschmacksgebende Komponente ist ein Stoff, der in Lebensmitteln zugelassen ist und dessen Funktion darin besteht, dem Endprodukt einen bestimmten Geschmack zu verleihen, beispielsweise ein Süßungsmittel, ein Salz, ein Lebensmittel, Lebensmittelextrakt oder ein Aromastoff. Die Mischung kann einen Aromastoff, ein Süßungsmittel, ein Salz, ein Lebensmittel, insbesondere einen Lebensmittelextrakt, einen Farbstoff, einen Stabilisator, ein Verdickungsmittel, einen Säureregulator, ein Antioxidans, einen Emulgator, einen Nahrungsergänzungsstoff, einen Konservierungsstoff, ein Koagulationsmittel oder eine Kombination davon umfassen. Es hat sich herausgestellt, dass Nahrungsmittelzusammensetzungen mit besonders hoher erwarteter Verbraucherakzeptanz bereitgestellt werden können, wenn das Verfahren ein Hinzugeben eines Aromastoffes, eines Süßungsmittels, eines Salzes, eines Lebensmittels, insbesondere eines Lebensmittelextraktes, eines Farbstoffes, eines Stabilisators, eines Verdickungsmittels, eines Säureregulators, eines Antioxidans, eines Emulgators, eines Nahrungsergänzungsstoffes, eines Konservierungsstoffes, eines Koagulationsmittels oder einer Kombination davon zu der Mischung umfasst. Ein Süßungsmittel kann beispielsweise ein Zucker, insbesondere Saccharose, Glucose, Fructose, Maltose oder Invertzucker, ein süßer mehrwertiger Alkohol, ein Zuckerrohrsaft, ein Stevia-Extrakt und/oder ein künstliches Süßungsmittel, insbesondere Aspartam, Acesulfam_K, Cyclamat oder Sucralose, umfassen. Ein Salz kann beispielsweise Natriumchlorid, Kaliumchlorid und/oder Meersalz umfassen. Ein der Mischung zugegebenes Lebensmittel oder ein Extrakt davon kann beispielsweise eine Frucht, eine Fruchtzubereitung, ein Fruchtextrakt, ein Gemüse, eine Gemüsezubereitung, ein Gemüseextrakt, eine Nuss oder Nusszubereitung, Schokolade und/oder Vanille sein. Ein Aromastoff kann jeglicher für Lebensmittel geeignete Aromastoff sein, beispielsweise geschmacksmodulierende Aromastoffe zur Überdeckung bzw. Maskierung von unerwünschten Geschmacksausprägungen. Ein Farbstoff kann beispielsweise einen natürlichen und/oder synthetischen Farbstoff, insbesondere ein färbendes Lebensmittel oder einen färbenden Lebensmittelextrakt, z.B. einen Extrakt aus roter Beete, umfassen. Ein Stabilisator kann jegliche Zutat sein, die dazu dient, die Beschaffenheit und die Handhabbarkeit des Produktes in definierter Weise zu erhalten. Ein Verdickungsmittel kann beispielsweise Stärke, modifizierte Stärke, Pektine, Alginate, Carrageen, Johannisbrotkernmehl, Guarkernmehl, Carboxymethylcellulose und/oder Xanthan umfassen. Ein Säureregulator kann beispielsweise Kaliumphosphat, Natriumphosphat, Natriumcitrat, Natriumcarbonat und/oder Zitronensäure umfassen. Ein Antioxidans kann beispielsweise Ascorbylester, insbesondere Ascorbylpalmitat, Tocopherol und/oder EDTA umfassen. Ein Nahrungsergänzungsstoff kann beispielsweise ein Vitamin, insbesondere Vitamin A, Vitamin B2, Vitamin B12, Vitamin D, Vitamin E, Vitamin K, Thiamin, Riboflavin, Pyridoxin, Carotinoid, Niacin, Folsäure, Pantothensäure, Biotin, Cholin und/oder Inositol; ein Mengen- oder Spurenelement, insbesondere Calcium, Phosphor, Natrium, Magnesium, Kalium, Eisen, Kupfer, Zink, Selen, Mangan, Jod, Kobalt und/oder Molybdän; einen Ballaststoff, insbesondere ein Oligosaccharid; und/oder eine Fettsäure, insbesondere eine Omega 3-Fettsäure und/oder Omega 6-Fettsäure, umfassen. Koagulationsmittel können beispielsweise Erdalkalimetall-Salze und/oder Erdalkalimetall-Hydroxide, insbesondere Calciumhydroxid, Calciumchlorid, Calciumsulfat, Magnesiumhydoxid, Magnesiumchlorid und/oder Magnesiumsulfat, beispielsweise in Form von Nigari, umfassen.

Das erfindungsgemäße Verfahren kann ein Dicklegen der Mischung, beispielsweise durch Säuern und/oder durch enzymatische Behandlung, umfassen. Das erfindungsgemäße Verfahren kann beispielsweise ein Dicklegen der Mischung durch Behandeln der Mischung mit Enzymen, beispielsweise mit Transglutaminase umfassen. Vorzugsweise umfasst das Verfahren ein Säuern der Mischung, um eine gesäuerte Mischung zu erhalten. Im Hinblick auf das Bereitstellen von Nahrungsmittelzusammensetzungen auf Basis von Milchprodukt-Analoga, beispielsweise zum Bereitstellen von veganen Joghurtersatzprodukten, veganen Trinkjoghurtersatzprodukten, veganen Kefirersatzprodukten, veganen Buttermilchersatzprodukten, veganen Dickmilchersatzprodukten oder veganen Quarkersatzprodukten, hat es sich als vorteilhaft erwiesen, wenn die in Schritt i) des erfindungsgemäßen Verfahrens bereitgestellte Mischung gesäuert wird und die gesäuerte Mischung in Schritt ii) des erfindungsgemäßen Verfahrens durch die Verarbeitungseinrichtung gedrängt wird. Die gesäuerte Mischung weist vorzugsweise einen pH-Wert in einem Bereich von pH 3,6 bis pH 4,8 auf. Es hat sich herausgestellt, dass Nahrungsmittelzusammensetzungen mit vorteilhaften Partikelgrößenverteilungen und geeigneter Produktstabilität, insbesondere einer Stabilität der Partikelgrößenverteilung über die Lagerdauer, bereitgestellt werden können, wenn die durch die von einer Mehrzahl von Öffnungen durchsetzte Verarbeitungseinrichtung gedrängte Mischung einen pH-Wert in einem Bereich von pH 3,6 bis pH 4,8 aufweist. Die in Schritt i) des erfindungsgemäßen Verfahrens bereitgestellte Mischung kann eine gesäuerte Mischung sein und/oder einen pH-Wert in einem Bereich von pH 3,6 bis pH 4,8 aufweisen.

Das erfindungsgemäße Verfahren kann ein Säuern der in Schritt i) des erfindungsgemäßen Verfahrens bereitgestellten Mischung durch Fermentieren der Mischung und/oder durch Hinzugeben eines Säuerungsmittels umfassen. Das Säuern mittels eines Säuerungsmittels kann beispielsweise ein Hinzugeben von einer organischen Säure und/oder Glucono-δ-lacton zu der Mischung umfassen, um eine gesäuerte Mischung zu erhalten. Das Säuern durch Fermentieren kann beispielsweise eine Fermentation durch Mikroorganismen, vorzugsweise Milchsäurebakterien, umfassen. Es hat sich herausgestellt, dass die Mischung besonders effizient gesäuert werden kann, wenn die Mischung unter Verwendung von Milchsäurebakterien, insbesondere ausgewählt aus *Lactobacillus* spp., *Streptococcus* spp., *Lactococcus* spp., *Bifidobacterium* spp. und Kombinationen davon, fermentiert wird. Besonders geeignete Milchsäurebakterien zum Säuern der Mischung sind beispielsweise *Lactobacillus* spp., *Streptococcus* spp., *Lactococcus* spp., *Bifidobacterium* spp. oder eine Kombination davon. Milchsäurebakterien können beispielsweise *Lactobacillus delbrueckii, Lactobacillus delbrueckii* subsp. *bulgaricus, Lactobacillus casei, Lactobacillus paracasei, Lactiplantibacillus plantarum, Lactobacillus acidophilus, Lactobacillus reuteri, Lactobacillus fermentum, Lactococcus garvieae, Lactococcus lactis, Lactococcus lactis* subsp. *lactis* biovar. *diacetylactis, Lactococcus lactis* subsp. *cremoris, Lactococcus piscium, Lactococcus raffinolactis, Bifidobacterium breve, Bifidobacterium animalis, Bifidobacterium infantis, Bifidobacterium adolescentis, Bifidobacterium longum, Streptococcus thermophilus, Streptococcus salivarius, Streptococcus thermophilus* oder eine Kombination davon umfassen.

Es hat sich herausgestellt, dass gesäuerte Nahrungsmittelzusammensetzungen mit gewünschten Produkteigenschaften, beispielsweise vegane Nahrungsmittelzusammensetzungen mit strukturellen und sensorischen Eigenschaften wie herkömmlicher Joghurt, beispielsweise dann erzielt werden, wenn das Verfahren ein Säuern der Mischung durch Fermentieren der Mischung, insbesondere mit Milchsäurebaktieren, für eine Dauer in einem Bereich von 4 h bis 20 h, vorzugsweise in einem Bereich von 6 h bis 14 h, bei einer Temperatur in einem Bereich von 20°C bis 45°C, vorzugsweise in einem Bereich von 37°C bis 43°C, umfasst. Durch das Säuern der Mischung kann eine gesäuerte Mischung, beispielsweise in Form eines Säuregels, erhalten werden. Der Mischung kann vor oder während einem Säuern ein Koagulationsmittel zugegeben werden. Es hat sich in Bezug auf eine effiziente Säuregelbildung als günstig erwiesen, wenn die Mischung ein Koagulationsmittel umfasst. Koagulationsmittel können beispielsweise Erdalkalimetall-Salze und/oder Erdalkalimetall-Hydroxide, insbesondere Calciumhydroxid, Calciumchlorid, Calciumsulfat, Magnesiumhydoxid, Magnesiumchlorid und/oder Magnesiumsulfat, beispielsweise in Form von Nigari, umfassen. Das Bereitstellen der Mischung in Schritt i) kann ein Zugeben von Hefeextrakt oder anderen Nährstoffen zur Mischung umfassen. Hefeextrakt bzw. andere Nährstoffe können die Vermehrung und den Stoffwechsel von Milchsäurebakterien fördern und die Säuerung und Aromabildung verbessern.

Es hat sich herausgestellt, dass mit dem erfindungsgemäßen Verfahren vegane Nahrungsmittelzusammensetzungen bereitgestellt werden können, die sensorische Eigenschaften wie Joghurt aufweisen und die solche sensorischen Eigenschaften auch dann erzielen, wenn sie mit geringen Mengen an Zusatzstoffen, beispielsweise mit nur geringen Mengen an Verdickungsmitteln, bereitgestellt werden.

Das erfindungsgemäße Verfahren kann beispielsweise folgende Schritte umfassen:
a) Bereitstellen einer vorzugsweise veganen Mischung, die ein oder mehrere Proteine, ausgewählt aus pflanzlichen Proteinen, mikrobiellen Proteinen, Pilzproteinen, rekombinanten Proteinen und Kombinationen davon, umfasst; wobei die Mischung vorzugsweise eine wässrige Dispersion oder wässrige Lösung, insbesondere ein veganes Milchprodukt-Analog, ist;
b) Dicklegen der Mischung, um eine dickgelegte Mischung zu erhalten; vorzugsweise Säuern der Mischung, um eine gesäuerte Mischung zu erhalten, wobei die gesäuerte Mischung vorzugsweise einen pH-Wert in einem Bereich von pH 3,6 bis pH 4,8 aufweist;
c) Drängen der dickgelegten Mischung, vorzugsweise der gesäuerten Mischung, durch eine von einer Mehrzahl von Öffnungen durchsetzte Verarbeitungseinrichtung von einer Retentatseite in Richtung auf eine Permeatseite, wobei die dickgelegte Mischung, vorzugsweise die gesäuerte Mischung, mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird.

Das erfindungsgemäße Verfahren kann beispielsweise folgende Schritte umfassen:
1) Bereitstellen einer vorzugsweise veganen Mischung, die ein oder mehrere Proteine, ausgewählt aus pflanzlichen Proteinen, mikrobiellen Proteinen, Pilzproteinen, rekombinanten Proteinen und Kombinationen davon, umfasst; wobei die Mischung vorzugsweise eine wässrige Dispersion oder wässrige Lösung, insbesondere ein veganes Milchprodukt-Analog, ist;
2) Erhitzen der Mischung zur Abtötung von Lebensmittelverderbern und krankheitserregenden Keimen;
3) Dicklegen der Mischung, um eine dickgelegte Mischung zu erhalten; vorzugsweise Säuern der Mischung, um eine gesäuerte Mischung zu erhalten, wobei die gesäuerte Mischung vorzugsweise einen pH-Wert in einem Bereich von pH 3,6 bis pH 4,8 aufweist;
4) Drängen der dickgelegten Mischung, vorzugsweise der gesäuerten Mischung, durch eine von einer Mehrzahl von Öffnungen durchsetzte Verarbeitungseinrichtung von einer Retentatseite in Richtung auf eine Permeatseite, wobei die dickgelegte Mischung, vorzugsweise die gesäuerte Mischung, mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird.

Das Erhitzen der Mischung in Schritt 2) erfolgt durch Einstellen der Temperatur-Zeit-Kombination. Dabei kann eine einen klassischem Pasteurisationsverfahren entsprechende Kombination (15 bis 30 Sek; 72-75 °C) gewählt werden. Eine minimale Dauer lässt dich dabei allerdings kaum festlegen, da z.B. auch hocherhitzt oder ultrahocherhitzt werden könnte. In diesen Fällen wären auch sehr kurze Heißhaltezeiten von 1 bis 4 Sekunden möglich. Bei der Erhitzung ist darauf zu achten, dass es auch zu einer gewünschten oder unerwünschten Veränderung (Denaturierung) der Proteine kommen kann. Daher können die optimalen Bedingungen in Abhängigkeit vom Rohstoff sehr unterschiedlich sein.

Es hat sich herausgestellt, dass mit den Schritten a)-c) bzw. mit den Schritten 1)-4) effizient Ersatzprodukte auf Basis von alternativen Proteinen, insbesondere vegane Ersatzprodukte, für fermentierte Milchprodukte, wie Joghurt, hergestellt werden können und gewünschte Produkteigenschaften, wie eine optische und sensorische Glattheit sowie eine gute Produktstabilität, erzielt werden.

Die mit dem erfindungsgemäßen Verfahren verarbeitete Nahrungsmittelzusammensetzung weist bevorzugt eine monomodale Partikelgrößenverteilung auf. Es hat sich herausgestellt, dass eine gewünschte optische und sensorische Produktglattheit sowie eine als angenehm empfundene Produktviskosität erzielt werden kann, wenn die Nahrungsmittelzusammensetzung eine monomodale Partikelgrößenverteilung aufweist. Die mit dem erfindungsgemäßen Verfahren verarbeitete Nahrungsmittelzusammensetzung, die vorzugsweise eine wässrige Dispersion ist oder umfasst, kann eine Partikelgrößenverteilung mit einem D90-Wert von 85 µm oder weniger und einem D50-Wert von 45 µm oder weniger haben. Die mit dem erfindungsgemäßen Verfahren verarbeitete Nahrungsmittelzusammensetzung kann beispielsweise einen D90-Wert in einem Bereich von 25 µm bis 85 µm, insbesondere in einem Bereich von 50 µm bis 75 µm, und/oder einen D50-Wert in einem Bereich von 5 µm bis 45 µm, insbesondere in einem Bereich von 10 µm bis 40 µm, vorzugsweise in einem Bereich von 20 µm bis 30 µm, aufweisen. Es hat sich im Sinne einer geeigneten Viskosität und einer hohen Produktstabilität als besonders vorteilhaft erwiesen, wenn die mit dem erfindungsgemäßen Verfahren verarbeitete Nahrungsmittelzusammensetzung eine monomodale Partikelgrößenverteilung mit einem D90-Wert von 70 µm oder weniger, insbesondere 65 µm oder weniger, und einem D50-Wert von 35 µm oder weniger, insbesondere 30 µm oder weniger, und/oder einen pH-Wert in einem Bereich von pH 3,6 bis pH 4,8, aufweist. Die Partikelgrößenverteilung wird vorzugsweise mittels Laserbeugungs-Partikelgrößenanalyse gemessen. Beispielsweise kann die Partikelgrößenverteilung mittels Laserbeugungs-Partikelgrößenanalyse unter Verwendung eines Malvern Mastersizer 3000 mit einer Nassdispergierzelle (Hydro MV), zum Beispiel auf Grundlage der Mie-Theorie sowie Brechungsindizes von 1,33 für das Dispergiermedium (beispielsweise destilliertes Wasser) und 1,46 für die Probe, wahlweise unter Einstellen einer Abschattung des Lasers durch die Probensuspension in einen Bereich von 3% bis 7%, gemessen sein. Dabei können zwei Laserquellen mit Wellenlängen von 470 nm und 632,8 nm zum Einsatz kommen.

Darüber hinaus hat es sich im Hinblick auf ein angenehmes Mundgefühl als besonders vorteilhaft erwiesen, wenn die mit dem erfindungsgemäßen Verfahren verarbeitete Nahrungsmittelzusammensetzung eine Viskosität von mindestens 200 mPa·s, insbesondere mindestens 250 mPa·s, beispielsweise eine Viskosität in einem Bereich von 200 bis 1000 mPa·s, insbesondere in einem Bereich von 250 bis 650 mPa·s, aufweist. Besonders bevorzugt weist die mit dem erfindungsgemäßen Verfahren verarbeitete Nahrungsmittelzusammensetzung eine Viskosität von mehr als 200 mPa s auf. Die Viskosität kann gemäß DIN 53019 und/oder ISO 3219, vorzugsweise mit einer Zylinder-Messeinrichtung nach DIN 53019 und ISO 3219, beispielsweise bei einer Probentemperatur von 10°C und einer Scherrate von 100 s⁻¹ nach einer Scherungsdauer von 60 s, gemessen werden. Die Viskosität wird vorzugsweise unter Verwendung eines Rotationsviskosimeters Haake Viscotester 550 mit einer koaxialen, zylindrischen Messeinheit (MV DIN; Rotor MV DIN 53019/ISO 3219) bei einer Probentemperatur von 10°C und einer Scherrate von 100 s⁻¹ nach einer Scherungsdauer von 60 s gemessen.

Es hat sich herausgestellt, dass die mit dem erfindungsgemäßen Verfahren verarbeitete Nahrungsmittelzusammensetzung besonders angenehme sensorische Eigenschaften und eine glatte Produktoberfläche aufweist, wenn die Nahrungsmittelzusammensetzung eine vorzugsweise monomodale Partikelgrößenverteilung mit einem D90-Wert von 70 µm oder weniger und einem D50-Wert von 35 µm oder weniger, sowie eine Viskosität von mehr als 200 mPa s aufweist.

Die Erfindung betrifft darüber hinaus eine Nahrungsmittelzusammensetzung, vorzugsweise eine vegane Nahrungsmittelzusammensetzung, welche durch das erfindungsgemäße Verfahren erhalten wird. Die mit dem erfindungsgemäßen Verfahren erhaltenen Nahrungsmittelzusammensetzungen weisen hervorragende Produkteigenschaften, wie eine hohe Produktstabilität und eine geeignete Viskosität, auf. Darüber hinaus ermöglicht das erfindungsgemäße Verfahren, Nahrungsmittelzusammensetzungen mit reduzierten Mengen an Zusatzstoffen im Vergleich zu herkömmlichen Produkten, welche pflanzliche Proteine, mikrobielle Proteine, Pilzproteine, rekombinante Proteine oder Kombinationen davon umfassen, beispielsweise mit reduzierten Mengen an Verdickungsmitteln bzw. ohne Verdickungsmittel, bereitzustellen. Verdickungsmittel können beispielsweise Stärke, modifizierte Stärke, Pektin oder Kombinationen davon sein.

Die Erfindung betrifft darüber hinaus eine Nahrungsmittelzusammensetzung, vorzugsweise eine vegane Nahrungsmittelzusammensetzung, die ein oder mehrere Proteine, ausgewählt aus pflanzlichen Proteinen, mikrobiellen Proteinen, Pilzproteinen, rekombinanten Proteinen und Kombinationen davon, umfasst und die dadurch gekennzeichnet ist, dass sie eine wässrige Dispersion ist, die eine Partikelgrößenverteilung mit einem D90-Wert von 85 µm oder weniger und einem D50-Wert von 45 µm oder weniger aufweist. Es hat sich beispielsweise als vorteilhaft erwiesen, wenn der D90-Wert in einem Bereich von 25 µm bis 85 µm, insbesondere in einem Bereich von 50 µm bis 75 µm, liegt und/oder der D50-Wert in einem Bereich von 5 µm bis 45 µm, insbesondere in einem Bereich von 10 µm bis 40 µm, vorzugsweise in einem Bereich von 20 µm bis 30 µm, liegt. Es hat sich herausgestellt, dass Nahrungsmittelzusammensetzungen in Form von wässrigen Dispersionen mit einer entsprechenden Partikelgrößenverteilung, insbesondere mit einer monomodalen Partikelgrößenverteilung, eine gewünschte Konsistenz aufweisen und ein hervorragendes Mundgefühl bereitstellen. Eine Nahrungsmittelzusammensetzung mit monomodaler Partikelgrößenverteilung weist im Wesentlichen nur ein Maximum in der Partikelgrößenverteilung auf. Eine bimodale Partikelgrößenverteilung weist zwei Maxima in der Partikelgrößenverteilung auf. Unter dem Begriff "D90" wird vorzugsweise eine Partikelgröße verstanden, die von 90 Volumenprozent der Partikel unterschritten und von 10 Volumenprozent der Partikel überschritten wird. Unter dem Begriff "D50" wird vorzugsweise eine Partikelgröße verstanden, die von 50 Volumenprozent der Partikel unterschritten und von 50 Volumenprozent der Partikel überschritten wird.

Es hat sich im Sinne einer geeigneten Viskosität und einer hohen Produktstabilität als besonders günstig erwiesen, wenn die Nahrungsmittelzusammensetzung eine monomodale Partikelgrößenverteilung mit einem D90-Wert von 70 µm oder weniger, insbesondere 65 µm oder weniger, und einem D50-Wert von 35 µm oder weniger, insbesondere 30 µm oder weniger, und/oder einen pH-Wert in einem Bereich von pH 3,6 bis pH 4,8, aufweist.

Darüber hinaus hat es sich im Hinblick auf das Erzielen eines angenehmen Mundgefühls als besonders vorteilhaft erwiesen, wenn die Nahrungsmittelzusammensetzung eine Viskosität von mindestens 200 mPa·s, insbesondere mindestens 250 mPa·s, beispielsweise eine Viskosität in einem Bereich von 200 bis 1000 mPa s, insbesondere in einem Bereich von 250 bis 650 mPa·s, aufweist. Besonders bevorzugt weist die Nahrungsmittelzusammensetzung eine Viskosität von mehr als 200 mPa·s auf. Es hat sich herausgestellt, dass die Nahrungsmittelzusammensetzung besonders angenehme sensorische Eigenschaften und eine glatte Produktoberfläche aufweist, wenn die Nahrungsmittelzusammensetzung eine vorzugsweise monomodale Partikelgrößenverteilung mit einem D90-Wert von 70 µm oder weniger und einem D50-Wert von 35 µm oder weniger, sowie eine Viskosität von mehr als 200 mPa s aufweist.

Die Nahrungsmittelzusammensetzung umfasst vorzugsweise ein oder mehrere pflanzliche Proteine, insbesondere Leguminosenproteine, bespielsweise Erbsenproteine, Sojaproteine, Bohnenproteine, Linsenproteine, Lupinenproteine, Kichererbsenproteine oder eine Kombination davon. Es hat sich im Hinblick auf den Nährstoffgehalt sowie den Geschmack der Nahrungsmittelzusammensetzung als vorteilhaft erwiesen, wenn die Nahrungsmittelzusammensetzung pflanzliche Proteine, insbesondere Leguminosenproteine, beispielsweise Erbsenproteine, umfasst.

Die Nahrungsmittelzusammensetzung kann einen Proteingehalt in einem Bereich von 1 bis 15 Gew.-%, vorzugsweise in einem Bereich von 2,5 bis 6 Gew.-%, und/oder einen Fettgehalt in einem Bereich von 0,1 bis 10 Gew.-% aufweisen. Die Nahrungsmittelzusammensetzung umfasst vorzugsweise ein oder mehrere Fette, beispielsweise Kokosnussöl, Sonnenblumenöl, Rapsöl, Palmöl, Palmkernöl, Färberdistelöl oder eine Kombination davon. Es hat sich im Hinblick auf den Geschmack und das optische Erscheinungsbild der Nahrungsmittelzusammensetzung als günstig erwiesen, wenn die Nahrungsmittelzusammensetzung Fett umfasst.

Die Nahrungsmittelzusammensetzung kann einen Aromastoff, ein Süßungsmittel, ein Salz, ein Lebensmittel, insbesondere einen Lebensmittelextrakt, einen Farbstoff, einen Stabilisator, ein Verdickungsmittel, einen Säureregulator, ein Antioxidans, einen Emulgator, einen Nahrungsergänzungsstoff, einen Konservierungsstoff, ein Koagulationsmittel oder eine Kombination davon umfassen.

Die Erfindung betrifft auch eine Verwendung einer Vorrichtung mit einer für eine Nahrungsmittelzusammensetzung von einer Retentatseite in Richtung auf eine Permeatseite durchlässigen Verarbeitungseinrichtung, gekennzeichnet durch eine längs der Retentatseite bewegbare und dadurch die Nahrungsmittelzusammensetzung in Richtung auf die Permeatseite drängende Einstreifeinrichtung, wobei die Verarbeitungseinrichtung einen von einer Mehrzahl von Öffnungen vorgegebener Größe und Geometrie durchsetzten, vorzugsweise starren Körper aufweist, zur Verarbeitung einer veganen Nahrungsmittelzusammensetzung, insbesondere zur Verarbeitung eines veganen Joghurtersatzprodukts, eines veganen Trinkjoghurtersatzprodukts, eines veganen Kefirersatzprodukts, eines veganen Buttermilchersatzprodukts, eines veganen Dickmilchersatzprodukts oder eines veganen Quarkersatzprodukts. Es hat sich herausgestellt, dass unter Verwendung einer entsprechenden Vorrichtung vegane Nahrungsmittelzusammensetzungen mit hervorragenden sensorischen und strukturellen Eigenschaften, insbesondere mit den sensorischen und strukturellen Eigenschaften von herkömmlichem Joghurt aus Milch vergleichbaren Eigenschaften, bereitgestellt werden können.

Die Einstreifeinrichtung kann ein Einstreifelement aufweisen, das bei einer Bewegung längs der Retentatseite einen sich in einer der Bewegungsrichtung entgegengesetzten Richtung verjüngenden Spalt zwischen einer retentatseitigen Begrenzungsfläche der Verarbeitungseinrichtung und dem Einstreifelement bildet. Dabei kann die Verarbeitungseinrichtung einen von Öffnungen vorgegebener Größe und Geometrie durchsetzten starren Körper, wie etwa ein Lochblech, aufweisen, wobei die Öffnungen vorzugsweise eine im Wesentlichen kreisförmige, ovale oder rechteckige Form aufweisen. Wie der vorstehenden Erläuterung erfindungsgemäßer Verfahren zu entnehmen ist, können die Öffnungen beispielsweise jeweils eine Fläche von weniger als 4420 µm², insbesondere eine Fläche in einem Bereich von 175 µm² bis 2830 µm², vorzugsweise eine Fläche in einem Bereich von 490 µm² bis 1595 µm²; und/oder eine größte Ausdehnung von weniger als 75 µm, insbesondere in einem Bereich von 15 bis 60 µm, vorzugsweise in einem Bereich von 25 bis 45 µm, aufweisen. Die vegane Nahrungsmittelzusammensetzung umfasst vorzugsweise ein oder mehrere Proteine, ausgewählt aus pflanzlichen Proteinen, mikrobiellen Proteinen, Pilzproteinen, rekombinanten Proteinen und Kombinationen davon, besonders bevorzugt Leguminosenproteine, wie beispielsweise Erbsenproteine, Sojaproteine, Bohnenproteine, Linsenproteine, Lupinenproteine, Kichererbsenproteine oder eine Kombination davon.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:

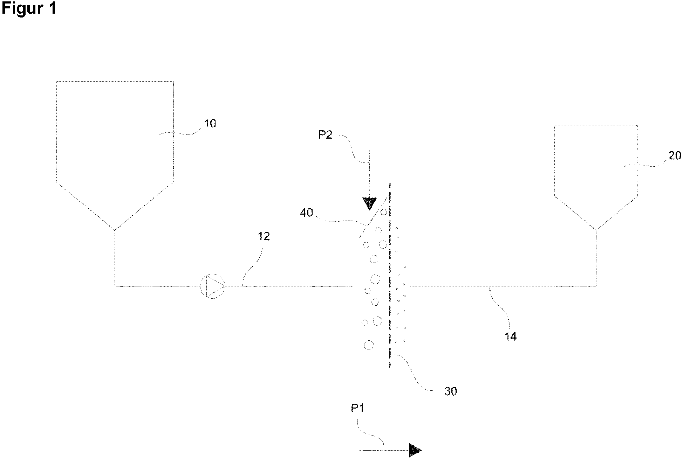

- **Fig. 1**: eine schematische Darstellung einer ersten Ausführungsform der Erfindung und

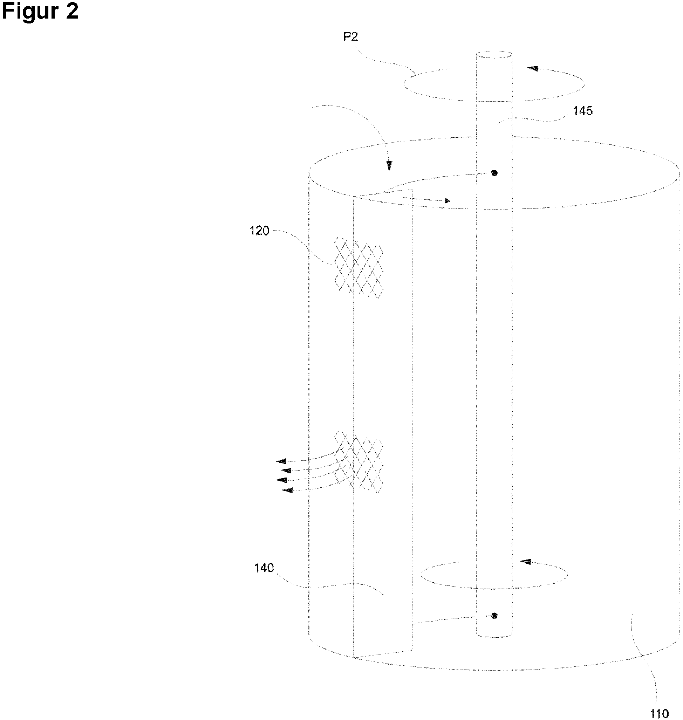

- **Fig. 2**: eine schematische Darstellung einer zweiten Ausführungsform der Erfindung.

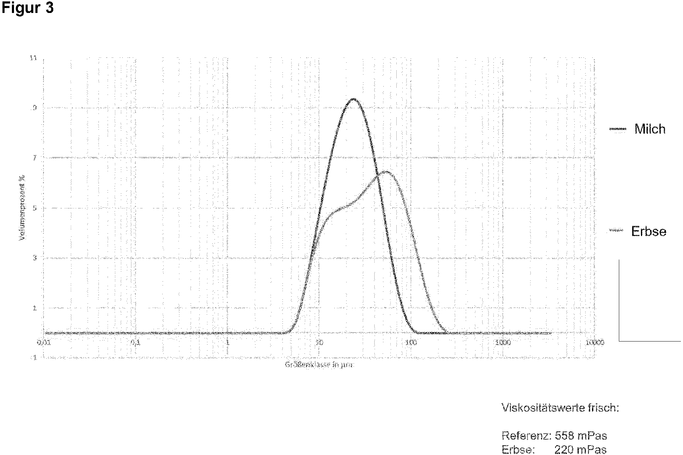

- **Fig. 3**: einen Vergleich der Partikelgrößen eines herkömmlichen Joghurts aus Milch mit einer beispielhaften erfindungsgemäßen Nahrungsmittelzusammensetzung, die mit dem erfindungsgemäßen Verfahren, insbesondere unter Verwendung einer von einer Mehrzahl von Öffnungen durchsetzten Verarbeitungseinrichtung mit einem Öffnungsdurchmesser von 75 µm, verarbeitet wurde. Die erfindungsgemäße Nahrungsmittelzusammensetzung weist, bei gleichem Verarbeiten der beiden zu vergleichenden Produkte, ein breiteres Verteilungsspektrum und größere Partikel als herkömmlicher Joghurt auf.

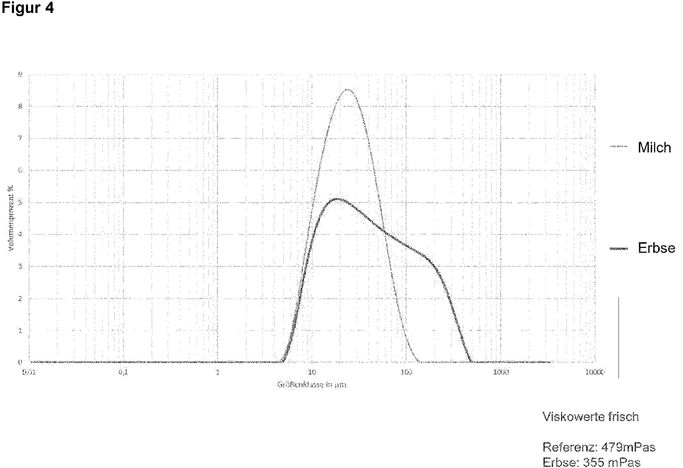

- **Fig. 4**: einen Vergleich der Partikelgrößen eines herkömmlichen Joghurts aus Milch mit einer beispielhaften veganen Nahrungsmittelzusammensetzung, welche ein oder mehrere Proteine, ausgewählt aus pflanzlichen Proteinen, mikrobiellen Proteinen, Pilzproteinen, rekombinanten Proteinen und Kombinationen davon, umfasst, und welche mit einem Eckrohrsieb mit einer Öffnungsgröße von 200 µm verarbeitet wurde. Die vegane Nahrungsmittelzusammensetzung weist, bei gleichem Verarbeiten der beiden zu vergleichenden Produkte, ein breiteres Verteilungsspektrum und größere Partikel als herkömmlicher Joghurt auf. Im Gegensatz zu dem herkömmlichen Joghurt weist die vegane Nahrungsmittelzusammensetzung auf Basis von Erbsenproteinen keine Normalverteilung der Partikelgrößenverteilung auf.

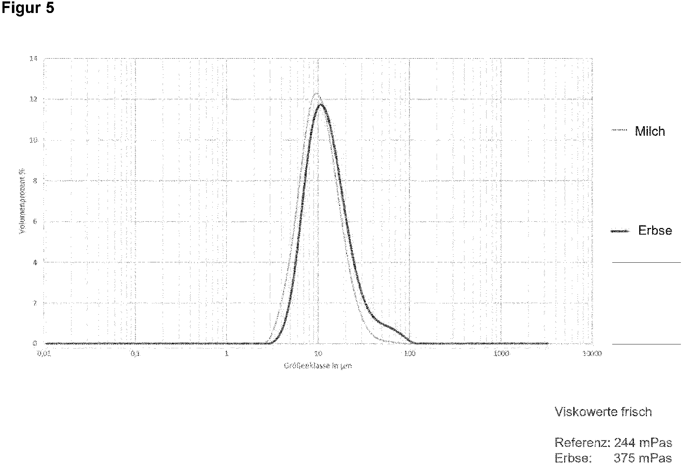

- **Fig. 5**: einen Vergleich der Partikelgrößen eines herkömmlichen Joghurts aus Milch mit einer beispielhaften veganen Nahrungsmittelzusammensetzung, welche mit einem Glättungsventil (8 bar) verarbeitet wurden. Die vegane Nahrungsmittelzusammensetzung weist, bei gleichem Verarbeiten der beiden zu vergleichenden Produkte, ein breiteres Verteilungsspektrum und größere Partikel als herkömmlicher Joghurt aus Milch auf.

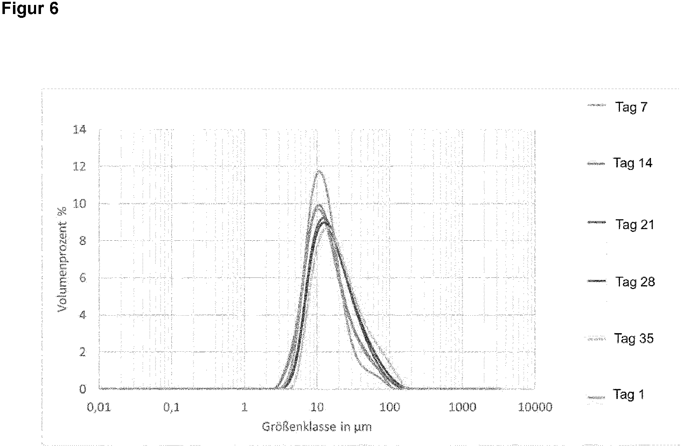

- **Fig. 6**: eine Analyse des Einflusses der Lagerdauer auf die Partikelgrößenverteilung einer veganen Nahrungsmittelzusammensetzung, welche ein oder mehrere Proteine, ausgewählt aus pflanzlichen Proteinen, mikrobiellen Proteinen, Pilzproteinen, rekombinanten Proteinen und Kombinationen davon, umfasst, welche mit einem Glättungsventil (8 bar) verarbeitet wurde. Die vegane Nahrungsmittelzusammensetzung weist über die Lagerdauer eine Partikelreaggregation auf.

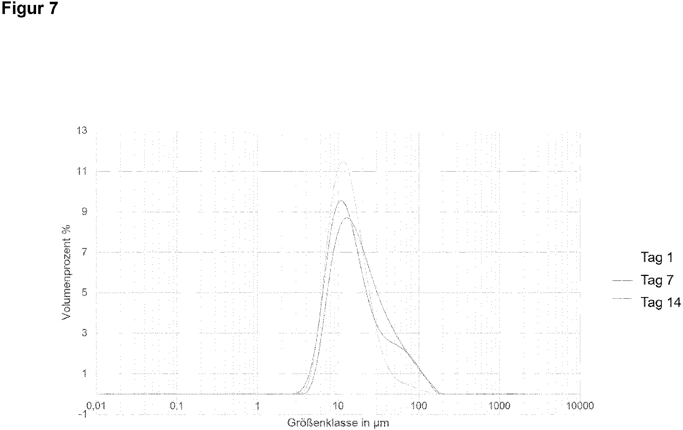

- **Fig. 7**: eine Analyse des Einflusses der Lagerdauer auf die Partikelgrößenverteilung einer veganen Nahrungsmittelzusammensetzung, welche ein oder mehrere Proteine, ausgewählt aus pflanzlichen Proteinen, mikrobiellen Proteinen, Pilzproteinen, rekombinanten Proteinen und Kombinationen davon, umfasst, welche mit einem Stretcher mit 60% Leistung verarbeitet wurde. Die vegane Nahrungsmittelzusammensetzung weist über die Lagerdauer eine Partikelreaggregation auf.

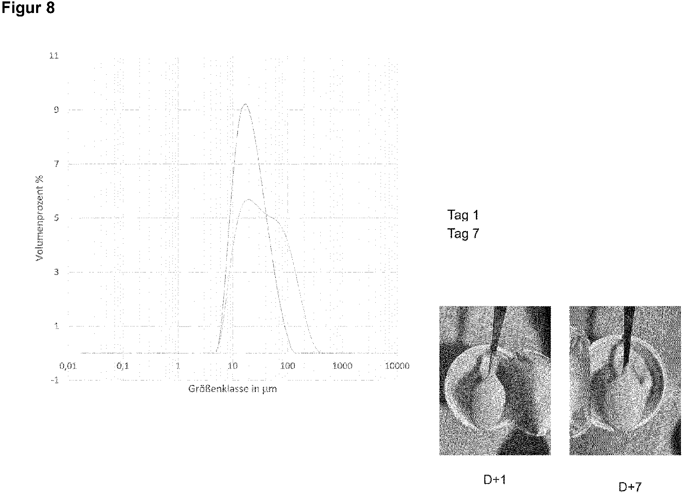

- **Fig. 8**: eine Analyse des Einflusses der Lagerdauer auf die Partikelgrößenverteilung einer veganen Nahrungsmittelzusammensetzung mit Erbsenprotein, welche mit einem Glättungsventil (8 bar) und einem nachgeschalteten Homogenisator (60 bar) verarbeitet wurde. Die vegane Nahrungsmittelzusammensetzung weist über die Lagerdauer eine Partikelreaggregation auf. D+1 bezieht sich auf Tag 1, D+7 bezieht sich auf Tag 7.

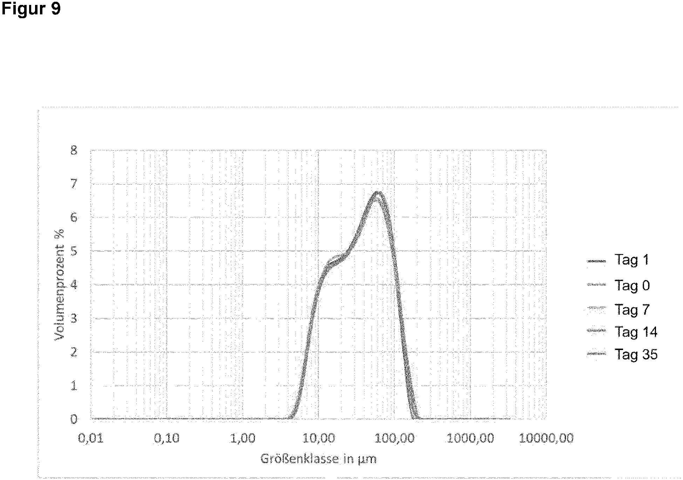

- **Fig. 9**: eine Analyse des Einflusses der Lagerdauer auf die Partikelgrößenverteilung einer beispielhaften erfindungsgemäßen Nahrungsmittelzusammensetzung, die mit dem erfindungsgemäßen Verfahren, insbesondere unter Verwendung einer von einer Mehrzahl von Öffnungen durchsetzten Verarbeitungseinrichtung mit einem Öffnungsdurchmesser von 75 µm, verarbeitet wurde. Die Nahrungsmittelzusammensetzung weist eine hohe Produktstabilität, insbesondere eine niedrige Partikelaggregation, über die Lagerdauer auf.

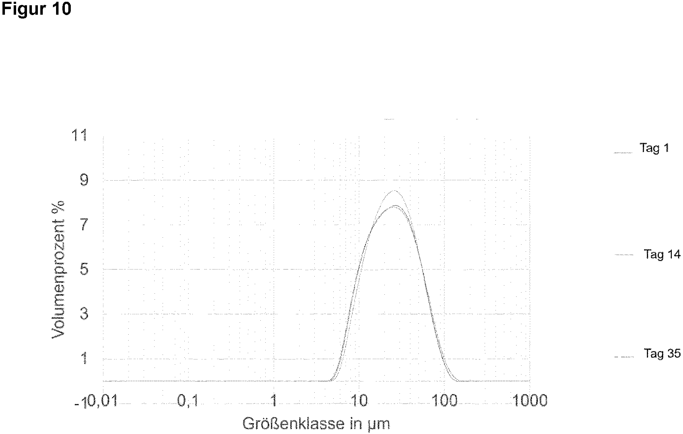

- **Fig. 10**: eine Analyse des Einflusses der Lagerdauer auf die Partikelgrößenverteilung einer bevorzugten erfindungsgemäßen Nahrungsmittelzusammensetzung, die mit dem erfindungsgemäßen Verfahren, insbesondere unter Verwendung einer von einer Mehrzahl von Öffnungen durchsetzten Verarbeitungseinrichtung mit einem Öffnungsdurchmesser von 35 µm, verarbeitet wurde. Die Nahrungsmittelzusammensetzung weist eine sehr hohe Produktstabilität, insbesondere eine sehr niedrige Partikelaggregation, über die Lagerdauer auf. Darüber hinaus weist die Nahrungsmittelzusammensetzung eine monomodale Partikelgrößenverteilung auf, welche bei längerer Lagerdauer erhalten bleibt. Die erfindungsgemäße Nahrungsmittelzusammensetzung weist eine hohe Produktstabilität, insbesondere eine niedrige Partikelreaggregation, über mindestens 35 Tage auf. Die Nahrungsmittelzusammensetzung weist eine gewünschte Konsistenz und eine glatte Produktoberfläche auf.

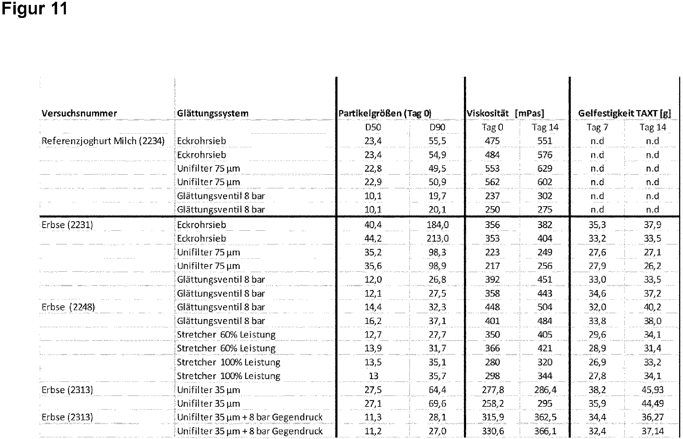

- **Fig. 11**: eine Übersicht über Analysen der Partikelgrößen, Viskositäten und Gelfestigkeiten von erfindungsgemäßen Nahrungsmittelzusammensetzungen und Vergleichsprodukten, insbesondere herkömmlichem Joghurt aus Milch. Es hat sich herausgestellt, dass erfindungsgemäße Nahrungsmittelzusammensetzungen, die mit dem erfindungsgemäßen Verfahren, beispielsweise unter Verwendung einer von einer Mehrzahl von Öffnungen durchsetzten Verarbeitungseinrichtung mit einem Öffnungsdurchmesser von 35 µm, verarbeitet wurden, hervorragende Produkteigenschaften aufweisen, insbesondere eine monomodale und über die Lagerdauer stabile Partikelgrößenverteilung, welche zu einer gewünschten Konsistenz und Viskosität führt. Es hat sich gezeigt, dass mit dem erfindungsgemäßen Verfahren Nahrungsmittelzusammensetzungen auf Basis von alternativen Proteinen, insbesondere vegane Nahrungsmittelzusammensetzungen, bereitgestellt werden können, welche strukturelle und sensorische Eigenschaften wie Milchprodukte, insbesondere wie Joghurt aus Milch, aufweisen.

Bei der in Fig. 1 dargestellten Ausführungsform der Erfindung wird eine vorzugsweise vegane Mischung, umfassend ein oder mehrere Proteine, ausgewählt aus pflanzlichen Proteinen, mikrobiellen Proteinen, Pilzproteinen, rekombinanten Proteinen und Kombinationen davon, aus einem Vorratsbehälter 10 über eine Leitung 12 in der durch den Pfeil P1 bezeichneten Strömungsrichtung in Richtung auf eine Verarbeitungseinrichtung in Form eines mit Poren versehenen Lochblechs 30 gepumpt. Nach Passieren des Lochblechs 30 gelangt die ein oder mehrere Proteine umfassende Mischung über die Leitung 14 in einen Sammelbehälter 20. Bei der in Fig. 1 dargestellten Ausführungsform der Erfindung wird die ein oder mehrere Proteine umfassende Mischung, beispielsweise eine gesäuerte Mischung, mit Hilfe eines in der durch den Pfeil P2 in schleifender Anlage an dem Lochblech 30 bewegbaren Einstreifblechs 40 durch das Lochblech 30 gedrängt. Dazu ist das Einstreifblech 40 so ausgeführt, dass ein sich in einer der Bewegungsrichtung P2 des Einstreifblechs 40 entgegengesetzten Richtung verjüngender Keilspalt zwischen dem Lochblech 30 und dem Einstreifblech 40 gebildet ist. Dadurch wird eine schonende Verarbeitung der Nahrungsmittelzusammensetzung begünstigt, wie vorstehend bereits erläutert.

Bei der in Fig. 2 dargestellten Ausführungsform der Erfindung ist die vorzugsweise vegane Mischung, umfassend ein oder mehrere Proteine, ausgewählt aus pflanzlichen Proteinen, mikrobiellen Proteinen, Pilzproteinen, rekombinanten Proteinen und Kombinationen davon, in einem Vorratsbehälter 110 aufgenommen, dessen Mantelfläche durch einen Siebkorb 120 gebildet ist. Zum Verarbeiten der Mischung wird diese mit Hilfe eines in schleifender Anlage längs der inneren Begrenzungsfläche des Siebkorbs 120 bewegten Einstreifblechs 140 durch den Siebkorb gedrängt. Dabei umläuft das Einstreifblech 140 eine Wellenachse 145 in der durch den Pfeil P2 bezeichneten Richtung, derart, dass ein sich in der der Bewegungsrichtung des Einstreifblechs 140 entgegengesetzten Richtung verjüngender Keilspalt zwischen dem Einstreifblech 140 und dem Siebkorb 120 gebildet ist. Die ein oder mehrere Proteine umfassende Mischung, beispielsweise eine gesäuerte Mischung, gelangt nach Passieren des Siebkorbs 120 ebenfalls in einen Vorratsbehälter, der in Fig. 2 nicht dargestellt ist.

Die Erfindung ist nicht auf die anhand der Zeichnung dargestellten Ausführungsformen beschränkt. Vielmehr ist auch an den Einsatz von Einstreifeinrichtungen mit zwei, drei oder mehr Einstreifblechen gedacht, die jeweils umlaufend an einer Einstreifwelle befestigt sein können.

Die in Fig. 3-11 dargestellten Ergebnisse zeigen, dass Nahrungsmittelzusammensetzungen auf Basis von Mischungen, die ein oder mehrere Proteine, ausgewählt aus pflanzlichen Proteinen, mikrobiellen Proteinen, Pilzproteinen, rekombinanten Proteinen und Kombinationen davon, umfassen, insbesondere Nahrungsmittelzusammensetzungen auf Basis von Leguminosenproteinen, z.B. Erbsenproteinen, im Vergleich zu klassischem Joghurt aus Milch unter identischen Glättungsbedingungen Partikeldispersionen mit deutlich größeren Partikeln und einem breiteren Partikelspektrum aufweisen. Es hat sich herausgestellt, dass zum Erreichen vergleichbarer Partikelgrößen wie im Referenzjoghurt Filter mit kleinerer Porengröße eingesetzt werden können. Unter Anwendung von Glättungsverfahren mit hoher Scherbeanspruchen (z.B. Glättungsventil und Homogenisator) war das Partikelverteilungsspektrum der getesteten Nahrungsmittelzusammensetzung im Gegensatz zum Referenzjoghurt nicht monomodal sondern hatten ein angedeutetes zweites Maximum. Es hat sich herausgestellt, dass die Viskosität einer Nahrungsmittelzusammensetzung auf Basis einer Mischung, die ein oder mehrere Proteine, ausgewählt aus pflanzlichen Proteinen, mikrobiellen Proteinen, Pilzproteinen, rekombinanten Proteinen und Kombinationen davon, umfasst, vom Glättungsverfahren abhängig ist. Darüber hinaus hat sich herausgestellt, dass Glättungsverfahren durch Drängen der vorzugsweise veganen Mischung durch eine von einer Mehrzahl von Öffnungen durchsetzten Verarbeitungseinrichtung von einer Retentatseite in Richtung auf eine Permeatseite, wobei die Mischung mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird, für Mischungen, die ein oder mehrere Proteine, ausgewählt aus pflanzlichen Proteinen, mikrobiellen Proteinen, Pilzproteinen, rekombinanten Proteinen und Kombinationen davon, umfassen, geeignet sind und Nahrungsmittelzusammensetzungen mit hervorragenden Produkteigenschaften ermöglichen, welche vergleichbar mit den strukturellen und sensorischen Eigenschaften herkömmlicher Milchprodukte sind. In Bezug auf den Erhalt hervorragender Produkteigenschaften, insbesondere einer geringen Neigung zur Partikelreaggregation und einer damit einhergehenden hohen Lagerstabilität sowie einer optischen und sensorischen Glattheit des Produktes, hat es sich insbesondere als günstig erwiesen, wenn die Öffnungen der Verarbeitungseinrichtung eine größte Ausdehnung von weniger als 75 µm, insbesondere in einem Bereich von 15 bis 60 µm, vorzugsweise in einem Bereich von 25 bis 45 µm, aufweisen.

Die in Fig. 11 dargestellten Partikelgrößenverteilungen wurden mithilfe von Laserbeugung bestimmt. Hierzu wurde ein Malvern Mastersizer 3000 mit einer Nassdispergierzelle (Hydro MV) eingesetzt. Bei der Methode wird die Partikelgrößenverteilung durch Messung der Winkelabhängigkeit der Intensität von gestreutem Licht eines Laserstrahls, der die dispergierte Partikelprobe durchdringt, ermittelt. Die Berechnung erfolgte auf der Grundlage der Mie-Theorie mit der gerätespezifischen Software. Als Brechungsindizes wurden 1,33 für das Dispergiermedium (destilliertes Wasser) und 1,46 für das Probenmaterial zugrunde gelegt. Die Abschattung des Lasers durch die Probensuspension wurde auf einen Bereich zwischen 3 und 7% eingestellt. Zur Ermittlung der in Fig. 11 dargestellten Viskositäten wurde ein Rotationsviskosimeter Haake VT 550 mit einer koaxialen, zylindrischen Messeinheit (MVDIN) verwendet. Der Messwert wurde nach einer 60 sekündigen Scherung bei einer Scherrate von 100 s-1 bei einer Probentemperatur von 10°C aufgenommen. Die in Fig. 11 dargestellte Gelfestigkeit wurde unter Verwendung eines Texture Analyser TA.XT plus (Stable Micro Systems Ltd., Surrey, UK) ermittelt. Bei der Messung wurde die Kraft, die einem Messköper unter definierten Bedingungen beim Eintauchen in die Probe entgegengesetzt wurde, ermittelt. Die Gelfestigkeit wurde mithilfe eines Messzylinders P/20 (Acrylglas; Durchmesser = 25 mm; Höhe = 40 mm), mit einer Vor-Geschwindigkeit von 5 mm/s, einer Test-Geschwindigkeit von 0,5 mm/s, eines Penetrationwegs von 15 mm und einer Auslösekraft von 0,5 g bei 10 °C ermittelt. Der Messwert wurde bei der maximalen Penetrationstiefe (15 mm) ermittelt.

## Patentansprüche

1. Verfahren zum Verarbeiten einer Nahrungsmittelzusammensetzung, vorzugsweise einer veganen Nahrungsmittelzusammensetzung, umfassend folgende Schritte:
iii) Bereitstellen einer vorzugsweise veganen Mischung, die ein oder mehrere Proteine, ausgewählt aus pflanzlichen Proteinen, mikrobiellen Proteinen, Pilzproteinen, rekombinanten Proteinen und Kombinationen davon, umfasst; wobei die Mischung vorzugsweise eine wässrige Dispersion oder wässrige Lösung, insbesondere ein veganes Milchprodukt-Analog, ist;
iv) Drängen der Mischung durch eine von einer Mehrzahl von Öffnungen durchsetzte Verarbeitungseinrichtung von einer Retentatseite in Richtung auf eine Permeatseite, wobei die Mischung mit einer vorzugsweise in schleifender Anlage längs einer retentatseitigen Begrenzungsfläche der Verarbeitungseinrichtung bewegten Einstreifeinrichtung durch die Verarbeitungseinrichtung gedrängt wird.

2. Verfahren nach Anspruch 1, **dadurch gekennzeichnet, dass** die Einstreifeinrichtung unter Bildung eines sich in einer der Bewegungsrichtung entgegengesetzten Richtung verjüngenden Keilspalts zwischen einer der Verarbeitungseinrichtung zugewandten Begrenzungsfläche der Einstreifeinrichtung und der retentatseitigen Begrenzungsfläche der Verarbeitungseinrichtung längs der retentatseitigen Begrenzungsfläche bewegt wird.

3. Verfahren nach Anspruch 1 oder 2, wobei die Verarbeitungseinrichtung einen von einer Mehrzahl von Öffnungen vorgegebener Größe und Geometrie durchsetzten, vorzugsweise starren, Körper aufweist;
wobei die Öffnungen vorzugsweise eine im Wesentlichen kreisförmige, ovale oder rechteckige Form aufweisen.

4. Verfahren nach einem der vorhergehenden Ansprüche, wobei die Öffnungen jeweils eine Fläche von weniger als 4420 µm², insbesondere eine Fläche in einem Bereich von 175 µm² bis 2830 µm², vorzugsweise eine Fläche in einem Bereich von 490 µm² bis 1595 µm², aufweisen; und/oder
wobei die Öffnungen eine größte Ausdehnung von weniger als 75 µm, insbesondere in einem Bereich von 15 bis 60 µm, vorzugsweise in einem Bereich von 25 bis 45 µm, aufweisen, besonders bevorzugt etwa kreisförmig ausgeführt sind.

5. Verfahren nach einem der vorhergehenden Ansprüche, **dadurch gekennzeichnet, dass** die Mischung ein oder mehrere pflanzliche Proteine, insbesondere Leguminosenproteine, umfasst;
wobei die Mischung vorzugsweise Erbsenproteine, Sojaproteine, Bohnenproteine, Linsenproteine, Lupinenproteine, Kichererbsenproteine, mikrobielle Proteine, Pilzproteine, rekombinante Proteine oder eine Kombination davon umfasst.

6. Verfahren nach einem der vorhergehenden Ansprüche, **dadurch gekennzeichnet, dass** die Mischung einen Proteingehalt in einem Bereich von 1 bis 15 Gew.-%, vorzugsweise in einem Bereich von 2,5 bis 6 Gew.-%, aufweist.

7. Verfahren nach einem der vorhergehenden Ansprüche, **dadurch gekennzeichnet, dass** die Mischung einen Fettgehalt in einem Bereich von 0,1 bis 10 Gew.-% aufweist;
wobei die Mischung vorzugsweise Kokosnussöl, Sonnenblumenöl, Rapsöl, Palmöl, Palmkernöl, Färberdistelöl oder eine Kombination davon umfasst.

8. Verfahren nach einem der vorhergehenden Ansprüche, **dadurch gekennzeichnet, dass** die Mischung fermentierbare Kohlenhydrate, insbesondere fermentierbare Kohlenhydrate in einer Menge in einem Bereich von 0,1 bis 15 Gew.-%, vorzugsweise fermentierbare Kohlenhydrate in einer Menge in einem Bereich von 0,5 bis 5 Gew.-%, umfasst.

9. Verfahren nach einem der vorhergehenden Ansprüche, **dadurch gekennzeichnet, dass** das Verfahren ein Hinzugeben eines Aromastoffes, eines Süßungsmittels, eines Salzes, eines Lebensmittels, insbesondere eines Lebensmittelextraktes, eines Farbstoffes, eines Stabilisators, eines Verdickungsmittels, eines Säureregulators, eines Antioxidans, eines Emulgators, eines Nahrungsergänzungsstoffes, eines Konservierungsstoffes, eines Koagulationsmittels oder einer Kombination davon zu der Mischung umfasst.

10. Verfahren nach einem der vorhergehenden Ansprüche, **dadurch gekennzeichnet, dass** das Verfahren ein Säuern der in Schritt i) bereitgestellten Mischung umfasst, wobei eine durch das Säuern erhaltene gesäuerte Mischung vorzugsweise einen pH-Wert in einem Bereich von pH 3,6 bis pH 4,8 aufweist;
wobei das Säuern vorzugsweise ein Säuern durch Fermentieren der Mischung unter Verwendung von Mikroorganismen, insbesondere unter Verwendung von Milchsäurebakterien, und/oder ein Säuern unter Verwendung eines Säuerungsmittels, insbesondere unter Verwendung einer organischen Säure und/oder Glucono-δ-lacton, umfasst,
wobei die Milchsäurebakterien vorzugsweise ausgewählt sind aus *Lactobacillus* spp., *Streptococcus* spp., *Lactococcus* spp. und *Bifidobacterium* spp.,
wobei die Milchsäurebakterien insbesondere ausgewählt sind aus *Lactobacillus delbrueckii, Lactobacillus delbrueckii* subsp. *bulgaricus, Lactobacillus casei, Lactobacillus paracasei, Lactiplantibacillus* plantarum, *Lactobacillus acidophilus, Lactobacillus reuteri, Lactobacillus fermentum, Lactococcus garvieae, Lactococcus lactis, Lactococcus lactis* subsp. *lactis* biovar. *diacetylactis, Lactococcus lactis* subsp. *cremoris, Lactococcus piscium, Lactococcus raffinolactis, Bifidobacterium breve, Bifidobacterium animalis, Bifidobacterium infantis, Bifidobacterium adolescentis, Bifidobacterium longum, Streptococcus thermophilus, Streptococcus salivarius, Streptococcus thermophilus* und Kombinationen davon.

11. Verfahren nach einem der vorhergehenden Ansprüche, **dadurch gekennzeichnet, dass** das Verfahren ein Säuern der in Schritt i) bereitgestellten Mischung durch Fermentieren der Mischung für eine Dauer in einem Bereich von 4 h bis 20 h, vorzugsweise in einem Bereich von 6 h bis 14 h, bei einer Temperatur in einem Bereich von 20°C bis 45°C, vorzugsweise in einem Bereich von 37°C bis 43°C, umfasst.

12. Verfahren nach einem der vorhergehenden Ansprüche, **dadurch gekennzeichnet, dass** ein Verhältnis zwischen einer Öffnungsfläche und einer nicht-Öffnungsfläche der Verarbeitungseinrichtung 1,5:1 oder weniger, vorzugsweise 1:1 oder weniger, beträgt, vorzugsweise wobei die Öffnungsfläche der Verarbeitungseinrichtung die Summe der Flächen der in der Verarbeitungseinrichtung vorhandenen Mehrzahl von Öffnungen ist und wobei die nicht-Öffnungsfläche der Verarbeitungseinrichtung einer Fläche der flächigen Erstreckung der Verarbeitungseinrichtung, von der die Summe der Flächen der in der Verarbeitungseinrichtung vorhandenen Mehrzahl von Öffnungen subtrahiert wird, entspricht

13. Verfahren nach einem der vorhergehenden Ansprüche, **dadurch gekennzeichnet, dass**
die Nahrungsmittelzusammensetzung eine wässrige Dispersion ist, wobei die wässrige Dispersion eine vorzugsweise monomodale Partikelgrößenverteilung mit einem D90-Wert von 85 µm oder weniger, vorzugsweise 70 µm oder weniger, insbesondere 65 µm oder weniger, und einem D50-Wert von 45 µm oder weniger, vorzugsweise 35 µm oder weniger, insbesondere 30 µm oder weniger, aufweist; und
wobei die Nahrungsmittelzusammensetzung vorzugsweise einen pH-Wert in einem Bereich von pH 3,6 bis pH 4,8 aufweist;
und/oder
die Nahrungsmittelzusammensetzung eine Viskosität von mindestens 200 mPa·s, insbesondere mindestens 250 mPa s aufweist; und
wobei die Nahrungsmittelzusammensetzung vorzugsweise eine Viskosität in einem Bereich von 200 bis 1000 mPa·s, insbesondere in einem Bereich von 250 bis 650 mPa·s, aufweist.

14. Nahrungsmittelzusammensetzung, vorzugsweise vegane Nahrungsmittelzusammensetzung, erhalten durch das Verfahren nach einem der vorhergehenden Ansprüche.

15. Nahrungsmittelzusammensetzung, vorzugsweise vegane
Nahrungsmittelzusammensetzung, umfassend ein oder mehrere Proteine, ausgewählt aus pflanzlichen Proteinen, mikrobiellen Proteinen, Pilzproteinen, rekombinanten Proteinen und Kombinationen davon; vorzugsweise ausgewählt aus Leguminosenproteinen; insbesondere ausgewählt aus Erbsenproteinen, Sojaproteinen, Bohnenproteinen, Linsenproteinen, Lupinenproteinen, Kichererbsenproteinen und Kombinationen davon;
**dadurch gekennzeichnet, dass** die Nahrungsmittelzusammensetzung eine wässrige Dispersion ist, die eine vorzugsweise monomodale Partikelgrößenverteilung mit einem D90-Wert von 85 µm oder weniger, vorzugsweise 70 µm oder weniger, insbesondere 65 µm oder weniger, und einem D50-Wert von 45 µm oder weniger, vorzugsweise 35 µm oder weniger, insbesondere 30 µm oder weniger, aufweist;
wobei die Nahrungsmittelzusammensetzung vorzugsweise einen pH-Wert in einem Bereich von pH 3,6 bis pH 4,8 aufweist.

16. Nahrungsmittelzusammensetzung nach Anspruch 15, **dadurch gekennzeichnet, dass** die Nahrungsmittelzusammensetzung eine Viskosität von mindestens 200 mPa·s, insbesondere mindestens 250 mPa s aufweist;
wobei die Nahrungsmittelzusammensetzung vorzugsweise eine Viskosität in einem Bereich von 200 bis 1000 mPa·s, insbesondere in einem Bereich von 250 bis 650 mPa·s, aufweist.

17. Verwendung einer Vorrichtung mit einer für eine Nahrungsmittelzusammensetzung von einer Retentatseite in Richtung auf eine Permeatseite durchlässigen Verarbeitungseinrichtung, **gekennzeichnet durch** eine längs der Retentatseite bewegbare und dadurch die Nahrungsmittelzusammensetzung in Richtung auf die Permeatseite drängende Einstreifeinrichtung, wobei die Verarbeitungseinrichtung einen von einer Mehrzahl von Öffnungen vorgegebener Größe und Geometrie durchsetzten, vorzugsweise starren Körper aufweist, zur Verarbeitung einer veganen Nahrungsmittelzusammensetzung, insbesondere zur Verarbeitung eines veganen Joghurtersatzprodukts, eines veganen Trinkjoghurtersatzprodukts, eines veganen Kefirersatzprodukts, eines veganen Buttermilchersatzprodukts, eines veganen Dickmilchersatzprodukts oder eines veganen Quarkersatzprodukts.
